# EUROPÄISCHE PATENTSCHRIFT

(11) **EP 3 811 336 B1**
(45) Veröffentlichungstag und Bekanntmachung des Hinweises auf die Patenterteilung: **12.07.2023**
(21) Anmeldenummer: 19723099.8
(22) Anmeldetag: 09.05.2019
(51) Int. Cl.: G06T 7/246

(54) **VERFAHREN ZUR BESTIMMUNG VON ZUEINANDER KORRESPONDIERENDEN BILDPUNKTEN, SOC ZUR DURCHFÜHRUNG DES VERFAHRENS, KAMERASYSTEM MIT DEM SOC, STEUERGERÄT UND FAHRZEUG**
METHOD FOR DETERMINING MUTUALLY CORRESPONDING IMAGE POINTS, SOC FOR PERFORMING THE METHOD, CAMERA SYSTEM HAVING THE SOC, CONTROLLER AND VEHICLE
PROCÉDÉ DE DÉTERMINATION DE PIXELS CORRESPONDANT LES UNS AUX AUTRES, SOC POUR L'EXÉCUTION DU PROCÉDÉ, SYSTÈME DE CAMERA AYANT LE SOC, UNITÉ DE COMMANDE ET VÉHICULE

(30) Priorität: 19.06.2018 DE 102018209898
(43) Veröffentlichungstag der Anmeldung: 28.04.2021
(73) Patentinhaber: Robert Bosch GmbH, 70442 Stuttgart (DE)
(72) Erfinder: SIMON, Stephan, 31079 Sibbesse (DE)
(86) Internationale Anmeldenummer: PCT/EP2019/061926
(87) Internationale Veröffentlichungsnummer: WO 2019/242929

(56) Entgegenhaltungen:
- STEIN F: "Efficient Computation of Optical Flow Using the Census Transform", ELECTRONIC PUBLISHING, ARTISTIC IMAGING, AND DIGITAL TYPOGRAPHY; [LECTURE NOTES IN COMPUTER SCIENCE , ISSN 0302-9743], SPRINGER VERLAG, DE, Bd. 3175, 1. August 2004 (2004-08-01), Seiten 79-86, XP002334021, ISBN: 978-3-540-24128-7
- YU TANABE ET AL: "Fast and Accurate Optical Flow Estimation using FPGA", ACM SIGARCH COMPUTER ARCHITECTURE NEWS, ACM SPECIAL INTEREST GROUP ON COMPUTER ARCHITECTURE, 2 PENN PLAZA, SUITE 701 NEW YORK NY 10121-0701 USA, Bd. 42, Nr. 4, 3. Dezember 2014 (2014-12-03), Seiten 27-32, XP058063080, ISSN: 0163-5964, DOI: 10.1145/2693714.2693720
- CORNELIA BECK ET AL: "Integration of Multiple Temporal and Spatial Scales for Robust Optic Flow Estimation in a Biologically Inspired Algorithm", 27. August 2007 (2007-08-27), COMPUTER ANALYSIS OF IMAGES AND PATTERNS; [LECTURE NOTES IN COMPUTER SCIENCE], SPRINGER BERLIN HEIDELBERG, BERLIN, HEIDELBERG, PAGE(S) 53 - 60, XP019098023, ISBN: 978-3-540-74271-5 Zusammenfassung Abschnitt 3; Abbildung 1(b)
- CLAUS C ET AL: "High performance FPGA based optical flow calculation using the census transformation", INTELLIGENT VEHICLES SYMPOSIUM, 2009 IEEE, IEEE, PISCATAWAY, NJ, USA, 3. Juni 2009 (2009-06-03), Seiten 1185-1190, XP031490013, ISBN: 978-1-4244-3503-6
- CAMELLINI GABRIELE ET AL: "3DV - An embedded, dense stereovision-based depth mapping sy", 2014 IEEE INTELLIGENT VEHICLES SYMPOSIUM PROCEEDINGS, IEEE, 8. Juni 2014 (2014-06-08), Seiten 1435-1440, XP032620335, DOI: 10.1109/IVS.2014.6856563 [gefunden am 2014-07-15]
- DEHNAVI M ET AL: "FPGA based real-time on-road stereo vision system", JOURNAL OF SYSTEMS ARCHITECTURE, Bd. 81, 1. November 2017 (2017-11-01), Seiten 32-43, XP085275154, ISSN: 1383-7621, DOI: 10.1016/J.SYSARC.2017.10.002

## Beschreibung

Die vorliegende Erfindung betrifft ein Verfahren zur kontinuierlichen Bestimmung von zueinander korrespondierenden Bildpunkten zwischen einem ersten Kamerabild und einem zweiten Kamerabild. Die Erfindung betrifft ferner ein System-on-a-Chip (SoC) zur Durchführung des Verfahrens und ein Kamerasystem mit dem SoC. Die Erfindung betrifft auch ein Steuergerät zur Durchführung des Verfahrens. Des Weiteren betrifft die Erfindung ein Fahrzeug mit diesem Kamerasystem oder diesem Steuergerät.

### Stand der Technik

Zum teil-autonomen oder autonomen Führen eines Fahrzeuges sollten kritische Fahrsituationen des Fahrzeugs, beispielsweise eine Kollisionsgefahr, zumindest in einer Zeitspanne von kleiner ca. 0,2 Sekunden erkannt werden. Diese Zeitspanne entspricht der durchschnittlichen Reaktionszeit eines Menschen. Vorteilhafter ist eine gegenüber der menschlichen Reaktion schnellere Reaktionszeit, beispielsweise eine Reaktionszeit von 0,1 Sekunden. Mit anderen Worten wird für das autonome oder teilautonome Fahren eine Erkennung einer Bewegung und einer Bewegungsrichtung eines Bildpunktes beziehungsweise eines Objektes eine Erkennungszeitspanne kleiner oder gleich 0,2 Sekunden benötigt.

Eine Ermittlung einer Bewegung beziehungsweise einer Bewegungsrichtung eines Bildpunktes in einer Abfolge von erfassten Kamerabildern kann beispielsweise in Abhängigkeit einer Bestimmung des optischen Flusses und/oder einer Erkennung von Objekten beziehungsweise einer Objektnachverfolgung durchgeführt werden. Die Erkennung von Objekten in nur einem Bild kann mit weniger Rechenoperationen und somit schneller als die Berechnung der optischen Flussvektoren zwischen zwei Bildern durchgeführt werden. Trotzdem ist die Ermittlung der Bewegung eines Bildpunktes und dessen Bewegungsrichtung in Abhängigkeit der Objekterkennung prinzipiell immer langsamer als eine Bestimmung optischer Flussvektoren, da zunächst Objekte in einem erfassten Kamerabild ohne deren Bewegungsparameter erkannt werden und erst anschließend die Bewegung beziehungsweise eine Änderung einer Bewegungsrichtung der erkannten Objekte in Abhängigkeit einer Folge mehrerer Kamerabilder ermittelt werden muss. Die Objekterkennung wird des Weiteren mittels von mit Trainingsdaten angelernten neuronalen Netzen durchgeführt, welche die Objekte erfahrungsbasiert erkennen. Gegebenenfalls werden folglich nicht alle Objekte in allen Situationen zuverlässig erkannt. Die Bestimmung des optischen Flusses kann dagegen unabhängig von Trainingsdaten durchgeführt werden und ist grundsätzlich analytisch. Die Herausforderung bei der Bestimmung des optischen Flusses besteht allerdings darin, zueinander korrespondierende Bildpunkte aus unterschiedlichen Kamerabildern schnell und zuverlässig zu ermitteln, wobei die Kamerabilder eine hohe Auflösung aufweisen und bevorzugt mit einer schnellen Erfassungsrate erfasst werden.

Die Schrift DE 103 51 778 A1 offenbart ein Verfahren zur Verarbeitung von Bilddaten bewegter Szenarien. Dazu werden in einzelnen zeitlich aufeinander folgenden Bilddatensätzen miteinander korrespondierende Bildpunkte bzw. Bildbereiche identifiziert. In einem ersten Schritt werden die zu vergleichenden Bilddatensätze mit einem Signaturoperator transformiert beziehungsweise für jedes Pixel ein Signaturstring beziehungsweise ein Signaturwert berechnet. Dieser Signaturstring wird in einer den einzelnen Bilddatensätzen zugeordneten Signaturtabelle gemeinsam mit den Bildpunktkoordinaten abgelegt. Nachfolgend wird für diejenigen Signaturstrings, welche in beiden Tabellen aufzufinden sind, eine Korrespondenzhypothese generiert.

Die Schrift XP002334021, STEIN: "Efficient Computation of Optical Flow Using the Census Transform", 2004, ISBN: 978-3-540-24128-7 offenbart ein Verfahren zur Bestimmung von Korrespondenzen zwischen zwei Bildern einer Fahrzeugkamera.

Die Dokument XP058063080, TANABE ET AL: "Fast and Accurate Optical Flow Estimation using FPGA", 2014, DO1: 10.1145/2693714.2693720 offenbart ein Verfahren zur Bestimmung des optischen Flusses.

Die Schrift XP019098023, BECK ET AL: "Integration of Multiple Temporal and Spatial Scales for Robust Optic Flow Estimation in a Biologically Inspired Algorithm", 2007, ISBN: 978-3-540-74271-5 offenbart ein Verfahren zur Abschätzung des optischen Flusses.

Die Aufgabe der vorliegenden Erfindung ist es, eine Ermittlung von zueinander korrespondierenden Bildpunkten zwischen einem ersten Kamerabild und einem zweiten Kamerabild zu optimieren.

### Offenbarung der Erfindung

Die vorstehende Aufgabe wird gemäß der unabhängigen Ansprüche 1 und 10-13 44gelöst.

Die Erfindung betrifft ein Verfahren zur Bestimmung von zueinander korrespondierenden Bildpunkten zwischen einem ersten Kamerabild und einem zweiten Kamerabild. Zu den korrespondierenden Bildpunkten der Kamerabilder wird insbesondere jeweils ein optischer Flussvektor des Bildpunktes von dem ersten Kamerabild zu dem zugeordneten Bildpunkt in dem zweiten Kamerabild, das heißt eine Bewegungsrichtung und eine Bewegungsgeschwindigkeit, ermittelt. Alternativ kann durch das Verfahren durch trigonometrische Berechnungen ein Abstand zwischen beispielsweise einem Fahrzeug und Objekten in der Umgebung des Fahrzeugs in Abhängigkeit der korrespondierenden Bildpunkte bestimmt werden.

In dem erfindungsgemäßen Verfahren erfolgt zunächst die Erfassung des ersten Kamerabildes, wobei das erste Kamerabild vorzugsweise kontinuierlich mit einer vorgegebenen Erfassungsrate beziehungsweise frame-rate aktualisiert wird. Die Erfassungsrate ist vorteilhafterweise größer oder gleich 5 Kamerabilder pro Sekunde und besonders bevorzugt größer oder gleich 60 Kamerabilder pro Sekunde. Weiterhin erfolgt eine Erfassung des zweiten Kamerabildes, wobei das zweite Kamerabild ebenfalls vorzugsweise kontinuierlich mit der vorgegebenen Erfassungsrate des ersten Kamerabildes aktualisiert wird. Das zweite Kamerabild wird vorteilhafterweise zeitlich versetzt zum ersten Kamerabild mittels einer Kamera erfasst, wobei diese Kamera sowohl das erste Kamerabild als auch das zweite Kamerabild erfasst und der zeitliche Versatz zwischen dem ersten Kamerabild und dem zweiten Kamerabild positiv oder negativ ist. Mit anderen Worten erfasst die Kamera vorzugsweise eine Abfolge von Kamerabilder mit der vorgegebenen Erfassungsrate. Die erfasste Abfolge von Kamerabilder wird optional in einem elektronischen Speicher zwischengespeichert, beispielsweise so, dass zusätzlich zu dem gerade in der Erfassung befindlichen beziehungsweise neuesten erfassten ersten und/oder zweiten Kamerabild die zuvor aufgenommenen letzten 16 Kamerabilder im elektronischen Speicher gespeichert sind. Das Verfahren kann grundsätzliches auf ein beliebiges Paar von Kamerabildern als erstes und zweites Kamerabild aus dieser im elektronischen Speicher gespeicherten Abfolge von Kamerabilder angewandt werden. Besonders bevorzugt umfasst das erste und zweite Kamerabild zumindest das neueste beziehungsweise das aktuell erfasste Kamerabild. Mit anderen Worten kann das zweite Kamerabild zeitlich nach dem ersten Kamerabild oder zeitlich vor dem ersten Kamerabild erfasst werden. Nach der Erfassung des ersten Kamerabildes und des zweiten Kamerabildes ist es optional vorgesehen, das erste und zweite Kamerabild anzupassen. Vorzugsweise werden durch die optionale Anpassung das erste Kamerabild und das zweite Kamerabild in Grauwertbilder transformiert, wobei diese Transformation eines Kamerabildes in ein Grauwertbild linear oder nichtlinear erfolgen kann. Alternativ oder zusätzlich kann die optionale Anpassung durch eine Skalierung einer Größe beziehungsweise einer Auflösung des ersten Kamerabildes und einer Größe des zweiten Kamerabildes durchgeführt werden. Die Anpassung erfolgt vorteilhafterweise in einer vorgegebenen Taktfrequenz, das heißt in einer vorgegebenen Reihenfolge in jedem Takt der Taktfrequenz sequenziell beziehungsweise Bildpunkt für Bildpunkt. Anschließend erfolgt pro Takt und in der vorgegebenen Taktfrequenz eine Ermittlung mindestens eines ersten Signaturmatrixelementes mit ersten Koordinaten einer ersten Signaturmatrix in Abhängigkeit des ersten Kamerabildes. Die Taktfrequenz wird insbesondere durch einen SoC (System-on-a-Chip) oder ein Steuergerät vorgegeben. Mit anderen Worten wird jeweils ein Signaturwert des ersten Signaturmatrixelements der ersten Signaturmatrix pro Takt ermittelt. Die vorgegebene Taktfrequenz beziehungsweise Rechentaktfrequenz ist vorzugsweise mindestens sechs Größenordnungen schneller als die Erfassungsrate des ersten und zweiten Kamerabildes. Jeder ermittelte Signaturwert eines ersten Signaturmatrixelementes der ersten Signaturmatrix repräsentiert jeweils eine Umgebung eines Bildpunktes des ersten Kamerabildes. Mit anderen Worten weisen erste Koordinaten eines ermittelten ersten Signaturmatrixelementes in der ersten Signaturmatrix eine feste Zuordnung zu Koordinaten eines Bildpunktes des ersten Kamerabildes auf. Die Signaturwerte der ersten Signaturmatrixelemente charakterisieren die jeweils zugeordneten Bildpunkte durch eine rechnerische Umgebungsbeschreibung des zugeordneten Bildpunktes. Bevorzugt werden die Signaturwerte jeweils durch eine oder mehrere einfache Rechenoperationen aus den benachbarten Bildpunktinhalten des zugeordneten Bildpunktes ermittelt, beispielsweise durch mehrfache Differenzbildung und/oder Summation mehrerer Grauwerte unmittelbar benachbarter oder in der Nähe liegender Bildpunkte. In einem weiteren Verfahrensschritt wird die erste Koordinate anschließend dem ermittelten Signaturwert in einer Signaturwertpositionstabelle zugeordnet. Mit anderen Worten wird in der Signaturwertpositionstabelle einem im aktuellen Takt ermittelten Signaturwert die Position, welche durch die ersten Koordinaten repräsentiert wird, des im aktuellen Takt ermittelten ersten Signaturmatrixelementes in der ersten Signaturmatrix zugeordnet. In der ermittelten beziehungsweise angepassten Signaturwertpositionstabelle sind somit einem Signaturwert erste Koordinaten des letzten ermittelten ersten Signaturmatrixelementes der ersten Signaturmatrix mit diesem Signaturwert zugeordnet. Das Verfahren weist des Weiteren eine Ermittlung eines Verkettungsmatrixelementes einer Verkettungsmatrix in Abhängigkeit der ersten Signaturmatrix und der Signaturwertpositionstabelle auf. Die Ermittlung des Verkettungsmatrixelementes der Verkettungsmatrix erfolgt bevorzugt in einem Takt nach jeder Ermittlung eines ersten Signaturmatrixelementes der ersten Signaturmatrix beziehungsweise vor einem Überschreiben von in der Signaturwertpositionstabelle zu einem Signaturwert der Signaturwertpositionstabelle zugeordneten ersten Koordinaten. Die Ermittlung der Verkettungsmatrix erfolgt insbesondere durch eine Speicherung der in der Signaturwertpositionstabelle zu einem im aktuellen Takt ermittelten Signaturwert zugeordneten letzten ersten Koordinaten des Signaturwerts in ein Verkettungsmatrixelement mit den ersten Koordinaten des aktuellen Taktes. Demnach wird ein Verkettungsmatrixelement vor der Ermittlung beziehungsweise einer Anpassung der Signaturwertpositionstabelle bestimmt, das heißt vor einer Zuordnung der ersten Koordinaten zu dem Signaturwert des ersten Signaturmatrixelementes in der Signaturwertpositionstabelle. Somit werden vorteilhafterweise die letzten ersten Koordinaten eines im aktuellen und in einem früheren Takt bestimmten Signaturwerts in der Verkettungsmatrix abgespeichert. In einem weiteren Verfahrensschritt wird pro Takt mindestens ein Signaturwert eines zweiten Signaturmatrixelementes einer zweiten Signaturmatrix in Abhängigkeit des zweiten Kamerabildes ermittelt, wobei dieser ermittelte Signaturwert jeweils eine Umgebung eines Bildpunkts des zweiten Kamerabildes repräsentiert. Die Signaturwerte der zweiten Signaturmatrix werden ebenfalls mit der vorgegebenen Taktfrequenz und in der vorgegebenen Reihenfolge kontinuierlich beziehungsweise sequenziell jeweils ein Signaturwert pro Takt ermittelt. In einem anschließenden Verfahrensschritt wird mindestens eine Korrespondenzmatrix in Abhängigkeit der bestimmten Signaturwertpositionstabelle, des ermittelten Signaturwertes der zweiten Signaturmatrix, der ermittelten Verkettungsmatrix, des ersten Kamerabildes und des zweiten Kamerabildes erfindungsgemäß durch Differenzbildung zwischen ersten Koordinaten und zweiten Koordinaten mit dem jeweils gleichen Signaturwert bestimmt. Mit anderen Worten wird beispielsweise zur Bestimmung der Korrespondenzmatrix eine Differenz zwischen den zweiten Koordinaten des im aktuellen Takt bestimmten zweiten Signaturmatrixelementes und den zu diesem zweiten Signaturmatrixelement ermittelten Signaturwert zugeordneten ersten Koordinaten in der Signaturwertpositionstabelle oder den zu diesen ersten Koordinaten in der Verkettungsmatrix zugeordneten älteren ersten Koordinaten gebildet. Die Differenzbildung im aktuellen Takt erfolgt erfindungsgemäß zwischen den zweiten Koordinaten des aktuellen Taktes und in Abhängigkeit einer Auswahl der dem Signaturwert der zweiten Signaturmatrix des aktuellen Takts zugeordneten und ausgelesenen ersten Koordinaten aus der Verkettungsmatrix oder der diesem Signaturwert zugeordneten und ausgelesenen ersten Koordinate aus der Signaturwertpositionstabelle, wobei die Auswahl in Abhängigkeit einer Eigenschaft der jeweils zu den ersten und zweiten Koordinaten zugeordneten Bildpunkte erfolgt. Diese Eigenschaft der Bildpunkte umfasst eine Farbe, eine Beschreibung der Umgebung des jeweiligen Bildpunktes und/oder eine Historie des jeweiligen Bildpunktes an den jeweiligen Koordinaten. Die Korrespondenzmatrix repräsentiert erfindungsgemäß zueinander korrespondierende Bildpunkte und die jeweiligen ermittelten optischen Flussvektoren zwischen dem ersten Kamerabild und dem zweiten Kamerabild. Die Korrespondenzmatrix wird insbesondere ebenfalls mit der vorgegebenen Taktfrequenz und kontinuierlich jeweils ein Korrespondenzmatrixelement pro Takt bestimmt beziehungsweise angepasst. Bevorzugt wird für jede Raumrichtung beziehungsweise Bilddimension jeweils mindestens eine Korrespondenzmatrix ermittelt. Die Korrespondenzmatrix kann optional in weiteren Verfahrensschritten eines Fahrerassistenzverfahrens weiterverwendet und/oder einem Nutzer beispielsweise farblich codiert angezeigt werden. Beispielsweise erfolgt anschließend optional als Fahrerassistenzverfahrensschritt eine Ansteuerung einer Bremse des Fahrzeugs in Abhängigkeit der Korrespondenzmatrix. Das Verfahren weist den Vorteil auf, dass auch bei hohen Auflösungen des ersten und zweiten Kamerabildes eine schnelle Berechnung der Korrespondenzmatrix mit geringem Speicherbedarf erfolgt, wobei die Zuordnung von zueinander korrespondierenden Bildpunkten für eine hohe Anzahl der Bildpunkte eines Kamerabildes zuverlässig ist. Demnach werden zueinander korrespondierende Bildpunkte aus zwei Kamerabildern und die zugehörigen optischen Flussvektoren mit diesem Verfahren mit hoher Güte und schnell ermittelt. Diese Vorteile resultieren, da die Bestimmung von zueinander korrespondierenden Bildpunkten zwischen einem ersten Kamerabild und einem zweiten Kamerabild in Abhängigkeit der Signaturwerte, das heißt der Umgebung eines jeweiligen Bildpunktes, und in Abhängigkeit einer Eigenschaft des jeweiligen Bildpunktes erfolgt.

In einer bevorzugten Weiterführung weisen die ermittelten Signaturwerte der ersten und zweiten Signaturmatrix eine vorgegebene Länge größer oder gleich 8 Bit und kleiner oder gleich 32 Bit auf, besonders bevorzugt beträgt die Länge 14 bis 18 Bit. Durch diese Weiterführung wird die Anzahl an Rechenoperationen beziehungsweise die Rechenzeit zur Ermittlung der Signaturwerte der ersten Signaturmatrixelemente und der zweiten Signaturmatrixelemente sowie die Ermittlung der Korrespondenzmatrix reduziert.

In einer Ausgestaltung kann es vorgesehen sein, mehrere erste Kamerabilder mit jeweils unterschiedlichem zeitlichem Versatz zum zweiten Kamerabild zu erfassen. Das Verfahren erfolgt anschließend im Takt für jedes dieser erfassten ersten Kamerabilder parallel, so dass pro Takt mehrere Elemente jeweils versatzabhängiger Korrespondenzmatrizen bestimmt werden. Diese Ausgestaltung weist den Vorteil auf, dass die unterschiedlichen Korrespondenzmatrizen unterschiedliche Geschwindigkeitshypothesen der zueinander korrelierenden Bildpunkte repräsentieren. Anschließende Verfahrensschritte, beispielsweise in einem Fahrerassistenzverfahren, können vorteilhafterweise in Abhängigkeit dieser versatzabhängigen Korrespondenzmatrizen durchgeführt werden, wodurch kritische Fahrsituationen zuverlässiger erkannt werden.

In einer weiteren Ausgestaltung kann es vorgesehen sein, mehrere zweite Kamerabilder mit jeweils unterschiedlichem zeitlichem Versatz zum ersten Kamerabild zu erfassen. Das Verfahren erfolgt anschließend im Takt für jedes dieser erfassten zweiten Kamerabilder parallel, so dass pro Takt mehrere Elemente jeweils versatzabhängiger Korrespondenzmatrizen bestimmt werden. Diese weitere Ausgestaltung weist dieselben Vorteile wie die vorgenannte Ausgestaltung auf, darüber hinaus den Vorteil, dass nur für das erste Kamerabild die Signaturwertpositionstabelle und die Verkettungsmatrix ermittelt werden. Demnach werden in dieser weiteren Ausgestaltung Ressourcen eingespart, weil die Signaturwertpositionstabelle und die Verkettungsmatrix für die Bestimmung der versatzabhängigen Korrespondenzmatrizen gemeinsam genutzt werden können.

Anschließend erfolgt optional eine Ermittlung einer konsolidierten Korrespondenzmatrix in Abhängigkeit eines Vergleiches der ermittelten versatzabhängigen Korrespondenzmatrizen untereinander oder in Abhängigkeit mit früher bestimmten Korrespondenzmatrizen. Dies weist den Vorteil auf, dass die Geschwindigkeitshypothesen beziehungsweise die versatzabhängigen Korrespondenzmatrizen plausibilisiert sowie unterschiedliche Geschwindigkeitshypothesen der Bildpunkte zwischen dem ersten und zweiten Kamerabild berücksichtigt werden. Unterschiedliche Geschwindigkeiten verschiedener Bildpunkte zwischen dem ersten und zweiten Kamerabild resultieren beispielsweise bereits daraus, dass die Abstände von Objekten in der Umgebung eines Fahrzeugs unterschiedlich sind und somit eine Relativgeschwindigkeit zwischen Objekten und dem Fahrzeug beziehungsweise der Bildpunkten zueinander variiert. Dadurch steigt die Zuverlässigkeit der ermittelten Korrespondenzmatrixelemente in der konsolidierten Korrespondenzmatrix gegenüber den einzeln ermittelten versatzabhängigen Korrespondenzmatrizen.

In einer weiteren Weiterführung kann es vorgesehen sein, eine Ermittlung einer ersten Zusatzmerkmalmatrix in Abhängigkeit des ersten Kamerabildes durchzuführen, wobei ein Zusatzmerkmalelement der ersten Zusatzmerkmalmatrix eine Eigenschaft eines Bildpunktes des ersten Kamerabildes repräsentiert. Das Zusatzmerkmalelement repräsentiert beispielsweise einen Farbwert eines zugeordneten Bildpunktes oder der Umgebung des Bildpunktes und/oder eine Varianz aus Farbwerten in der Umgebung des Bildpunktes und/oder einen Rauschwert in der Umgebung des zugeordneten Bildpunkts und/oder ein dem Bildpunkt zugeordnetes erkanntes Objekt oder Segment in dem ersten Kamerabild und/oder eine Eigenschaft des zugeordneten Bildpunktes in der Vergangenheit. Die Zusatzmerkmalelemente der Zusatzmerkmalmatrix werden insbesondere kontinuierlich in der vorgegebenen Taktfrequenz ermittelt. Optional erfolgt in dieser Weiterführung eine Ermittlung einer zweiten Zusatzmerkmalmatrix in Abhängigkeit des zweiten Kamerabildes, wobei ein Zusatzmerkmalelement der zweiten Zusatzmerkmalmatrix eine Eigenschaft eines zugeordneten Bildpunktes des zweiten Kamerabildes repräsentiert. Beispielsweise repräsentiert das Zusatzmerkmalelement der zweiten Zusatzmerkmalmatrix entsprechend ebenfalls einen Farbwert eines zugeordneten Bildpunktes oder der Umgebung des Bildpunktes und/oder eine Varianz aus Farbwerten in der Umgebung des Bildpunktes und/oder einen Rauschwert in der Umgebung des zugeordneten Bildpunkts und/oder ein dem Bildpunkt zugeordnetes erkanntes Objekt oder Segment in dem zweiten Kamerabild und/oder eine Eigenschaft des zugeordneten Bildpunktes in der Vergangenheit. Die Zusatzmerkmalelemente der zweiten Zusatzmerkmalmatrix werden ebenfalls in der vorgegebenen Taktfrequenz vorteilhafterweise kontinuierlich jeweils ein Zusatzmerkmalelement pro Takt ermittelt. In dieser Weiterführung wird die Korrespondenzmatrix zusätzlich in Abhängigkeit der ersten Zusatzmerkmalmatrix und der zweiten Zusatzmerkmalmatrix ermittelt. Dadurch resultiert der Vorteil einer zuverlässigeren Zuordnung zwischen zwei korrespondierenden Bildpunkten zwischen dem ersten und dem zweiten Kamerabild.

In einer bevorzugten Ausgestaltung können mehrere Signaturwertpositionstabellen und/oder mehrere Verkettungsmatrizen zur ersten Signaturmatrix eines erfassten ersten Kamerabildes bestimmt werden, wobei jede Signaturwertpositionstabelle und/oder jede Verkettungsmatrix jeweils einen Teilbereich der ersten Signaturmatrix repräsentiert. Durch diese Ausgestaltung wird mit anderen Worden der untersuchte Bildbereich zu zueinander korrespondierenden Bildpunkten zwischen dem ersten Kamerabild und dem zweiten Kamerabild auf den jeweiligen Teilbereich des ersten Kamerabildes beziehungsweise der zugeordneten ersten Signaturmatrix begrenzt.

Dadurch erfolgt vorteilhafterweise eine Ermittlung der Korrespondenztabelle in Abhängigkeit der zweiten Koordinaten zum im aktuellen Takt ermittelten Signaturwert der zweiten Signaturmatrix sowie der diesen zweiten Koordinaten entsprechenden ersten Koordinaten zugeordneten Signaturwertpositionstabelle beziehungsweise der diesen zweiten Koordinaten entsprechenden ersten Koordinaten zugeordneten Verkettungsmatrix. Die Bestimmung zueinander korrespondierender Bildpunkte kann damit schneller und effizienter erfolgen. Durch diese Ausgestaltung kann die Erfassungsrate zur Erfassung des ersten und zweiten Kamerabildes erhöht werden, da die korrespondierenden Bildpunkte schneller und effizienter ermittelt werden.

In einer besonders bevorzugten Ausgestaltung erfolgt die Bestimmung der Korrespondenzmatrix in Abhängigkeit eines vorgegebenen Suchbereichs. Der vorgegebene Suchbereich wird bevorzugt in Abhängigkeit der zweiten Koordinaten des aktuellen Taktes und/oder in Abhängigkeit zeitlich früher bestimmter Korrespondenzmatrizen ermittelt. Beispielsweise kann durch eine zeitlich früher bestimmte Korrespondenzmatrix beziehungsweise einen früher ermittelten optischen Flussvektor zu einem Bildpunkt eine Bewegung dieses Bildpunktes in der Zukunft abgeschätzt beziehungsweise der Suchbereich bestimmt werden. Der Suchbereich kann des Weiteren mehrere Signaturwertpositionstabellen und/oder Verkettungsmatrizen aufweisen. Mit anderen Worten werden vorteilhafterweise in dieser Ausgestaltung eine oder mehrere zugeordnete ersten Koordinaten zu einem aktuellen ermittelten Signaturwert eines Signaturmatrixelements der zweiten Signaturmatrix in mehreren Signaturwertpositionstabellen zur Ermittlung der Korrespondenzmatrix identifiziert, wobei die Korrespondenzmatrix anschließend in Abhängigkeit von in der oder den Signaturwertpositionstabellen zugeordneten ersten Koordinaten ermittelt wird, welche in dem Suchbereich liegen. Bei mehreren passenden ersten Koordinaten im Suchbereich wird die Korrespondenzmatrix zusätzlich in Abhängigkeit einer Eigenschaft des jeweiligen Bildpunktes in dem ersten Kamerabild und dem zweiten Kamerabild und/oder eines ersten und/oder zweiten Zusatzmerkmals des jeweiligen Bildpunktes ermittelt. Durch diese Ausgestaltung wird die Zuverlässigkeit der ermittelten zueinander korrespondierenden Bildpunkte erhöht. Des Weiteren wird durch diese Ausgestaltung das Verfahren beschleunigt.

In einer Ausführung kann es vorgesehen sein, dass sich eine aktuelle erste Koordinatenposition zur Ermittlung eines Signaturmatrixelementes der zweiten Signaturmatrix zu einer aktuellen zweiten Koordinatenposition zur Ermittlung eines Signaturmatrixelementes der ersten Signaturmatrix unterscheidet. Vorzugsweise ist die zweite Koordinatenposition zur Ermittlung des Signaturmatrixelementes der zweiten Signaturmatrix eine vor mindestens zehn Takten zur Ermittlung des Signaturmatrixelementes der ersten Signaturmatrix bearbeitete Koordinatenposition. Mit anderen Worten sind die in einem aktuellen Takt bearbeitete Koordinatenposition des Signaturmatrixelementes der ersten Signaturmatrix und die im aktuellen Takt bearbeitete Koordinatenposition des Signaturmatrixelementes der zweiten Signaturmatrix zueinander versetzt. Durch diese Ausgestaltung wird die Zuverlässigkeit der ermittelten zueinander korrespondierenden Bildpunkte erhöht.

In einer Weiterführung wird eine Anpassung eines Korrespondenzmatrixelementes der Korrespondenzmatrix in Abhängigkeit der Korrespondenzmatrixelemente in einer Umgebung dieses Korrespondenzmatrixelementes und/oder in Abhängigkeit von zeitlich früher bestimmter Korrespondenzmatrizen durchgeführt. Dadurch entsteht der Vorteil einer nachträglichen Filterung beziehungsweise Plausibilisierung der ermittelten Korrespondenzmatrix beziehungsweise der optischen Flussvektoren beziehungsweise der zueinander zugeordneten Bildpunkte. Diese Weiterführung kann insbesondere bei erfassten Kamerabildern mit hoher Auflösung vorteilhaft sein, um Fehlzuordnungen zwischen Bildpunkten des ersten und zweiten Kamerabildes nachträglich zu korrigieren, insbesondere in einem Bereich der Kamerabilder mit erhöhten strukturellen Wiederholungen, beispielsweise eines dargestellten Zaunes oder eines dargestellten Himmels.

Die Erfindung betrifft des Weiteren einen SoC zur Durchführung des erfindungsgemäßen Verfahrens, das heißt ein System-on-a-Chip (SoC). Der SoC ist dazu eingerichtet, ein erstes Kamerabild mittels einer Kamera zu erfassen, wobei das erste Kamerabild insbesondere kontinuierlich mit einer vorgegebenen Erfassungsrate beziehungsweise frame-rate aktualisiert wird. Der SoC ist des Weiteren dazu eingerichtet, ein zweites Kamerabild zu erfassen, insbesondere mittels der Kamera, wobei das zweite Kamerabild vorteilhafterweise kontinuierlich mit der vorgegebenen Erfassungsrate beziehungsweise frame-rate aktualisiert wird. Der SoC weist vorteilhafterweise mindestens eine vorgegebene Taktfrequenz auf, wobei eine Taktfrequenz mindestens sechs Größenordnungen schneller als die Erfassungsrate des ersten und zweiten Kamerabildes ist. Der SoC ist des Weiteren dazu eingerichtet, mindestens eine Korrespondenzmatrix in Abhängigkeit des erfassten ersten Kamerabildes und des erfassten zweiten Kamerabildes zu bestimmen und ein Ausgangssignal in Abhängigkeit der bestimmten Korrespondenzmatrix zu erzeugen. Das Ausgangssignal repräsentiert insbesondere den Koordinaten der Bildpunkte des zweiten Kamerabildes zugeordnete optische Flussvektoren zwischen dem ersten und dem zweiten Kamerabild. Der erfindungsgemäße SoC weist den Vorteil auf, bei hohen Auflösungen der Kamerabilder und schnellen Erfassungsraten der Kamerabilder zueinander korrespondierende Bildpunkte zwischen dem ersten Kamerabild und dem zweiten Kamerabild mit hoher Güte effektiv zu ermitteln. Ein besonders geringer elektrischer Speicherbedarf für den SoC resultiert, wenn in dem Verfahren ermittelte Elemente der ersten Signaturmatrix und/oder der zweiten Signaturmatrix und/oder der Verkettungsmatrix nur kurzfristig berechnet beziehungsweise gespeichert werden und die entsprechenden Speicherstellen für neu berechnete Werte freigegeben werden, sobald sicher ist, dass auf die jeweilige Speicherstelle nicht mehr zugegriffen wird.

Die Erfindung betrifft auch ein Kamerasystem, welches mindestens eine Kamera aufweist. Das Kamerasystem ist dazu eingerichtet, ein erstes Kamerabild und ein, insbesondere zeitlich gegenüber dem ersten Kamerabild versetztes, zweites Kamerabild kontinuierlich mit einer vorgegebenen Erfassungsrate zu erfassen. Des Weiteren weist das Kamerasystem den erfindungsgemäßen SoC auf.

Die Erfindung betrifft ferner ein Steuergerät zur Durchführung des erfindungsgemäßen Verfahrens.

Die Erfindung betrifft darüber hinaus ein Fahrzeug mit dem erfindungsgemäßen Kamerasystem oder dem erfindungsgemäßen Steuergerät.

Weitere Vorteile ergeben sich aus der nachfolgenden Beschreibung von Ausführungsbeispielen mit Bezug zu den Figuren.
Figur 1: Ablaufdiagramm des Verfahrens als Blockschaltbild
Figur 2: Kamerabild
Figur 3: Signaturmatrix
Figur 4: Ausschnitt aus einer Signaturwertpositionstabelle
Figur 5: Verkettungsmatrix
Figur 6: Korrespondenzmatrix
Figur 7: Aufteilung der ersten Signaturmatrix in Teilbereiche sowie Suchbereich
Figur 8: System-on-a-Chip (SoC)

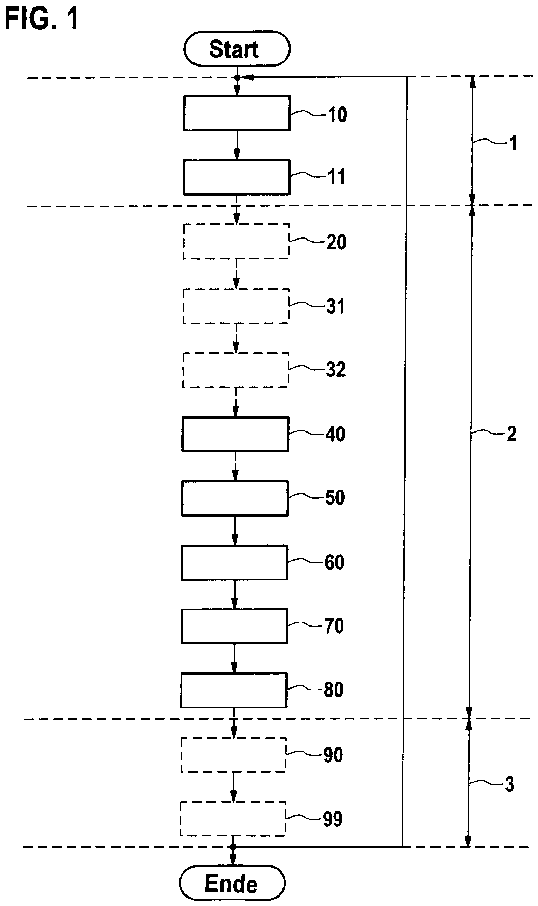

In Figur 1 ist ein Ablaufdiagramm des Verfahrens als Blockschaltbild dargestellt. Das Verfahren beginnt mit einer Erfassung 10 eines ersten Kamerabildes, wobei das erste Kamerabild mit einer vorgegebenen Erfassungsrate aktualisiert wird. Anschließend wird im Schritt 11 ein zweites Kamerabild erfasst. Das erste und das zweite Kamerabild weisen eine vorgegebene Auflösung auf. Die Erfassung 10 des ersten Kamerabildes und die Erfassung 11 des zweiten Kamerabildes erfolgen ferner jeweils mit der vorgegebenen Erfassungsrate, wobei das erste Kamerabild und das zweite Kamerabild beispielsweise mittels einer Kamera erfasst werden und einen vorgegebenen zeitlicher Versatz zueinander aufweisen. Beispielsweise erfolgen die Erfassungen 10 und 11 mit 60 Kamerabildern pro Sekunde, wobei das erste und zweite Kamerabild jeweils mindestens eine XGA-Auflösung aufweisen, das heißt, dass jedes erfasste Kamerabild wenigstens 1024 × 768 Bildpunkte umfasst.

Vorteilhafterweise weisen das erste und das zweite erfasste Kamerabild jeweils eine FullHD - Auflösung mit 1920 × 1080 Bildpunkten und besonders bevorzugt jeweils eine 4K UHD - Auflösung mit 3840 × 2160 Bildpunkten auf. Alle an die Erfassung 10 des ersten Kamerabildes anschließenden Verfahrensschritte können in einem Rechentakt beziehungsweise in einer vorgegebenen Taktfrequenz der verwendeten Recheneinheit eines SoCs oder eines Steuergerätes ermittelt werden, welche beispielsweise 1 GHz beträgt. Dabei wird bevorzugt pro Takt jeweils ein Element einer Matrix ermittelt. Die jeweils ermittelten Matrixelemente werden jeweils in einem Speicher abgelegt, wobei manche ermittelten Matrixelemente nur kurzzeitig für nachfolgende Verfahrensschritte des aktuellen Taktes gespeichert beziehungsweise optional im nachfolgenden Takt überschrieben werden. Zunächst ist optional in einem Schritt 20 vorgesehen, dass erfasste erste Kamerabild und/oder das erfasste zweite Kamerabild anzupassen, beispielsweise ein jeweiliges RGB-Farbbild in ein Grauwertbild umzuwandeln und/oder das erste und das zweite Kamerabild zu skalieren. In einem ebenfalls optionalen Schritt 31 wird zu jedem Bildpunkt des ersten Kamerabildes ein Zusatzmerkmal in Abhängigkeit des ersten Kamerabildes ermittelt und einem Zusatzmerkmalelement einer ersten Zusatzmerkmalmatrix zugeordnet. Die erste Zusatzmerkmalmatrix repräsentiert eine weitere Eigenschaft der Bildpunkte des ersten Kamerabildes. Der Schritt 31 kann eine Ermittlung von Farbwerten zu einem jeweiligen Bildpunkt und/oder Rauschwerten zu einer Umgebung eines jeweiligen Bildpunktes und/oder eine Erkennung von Objekten und/oder Segmenten im ersten Kamerabild an den ersten Koordinaten umfassen, welche jeweils in der ersten Zusatzmerkmalmatrix dem jeweiligen Bildpunkt zugordnet werden. Im weiteren optionalen Schritt 32 wird zu jedem Bildpunkt des zweiten Kamerabildes ein Zusatzmerkmal in Abhängigkeit des zweiten Kamerabildes ermittelt und einem Zusatzmerkmalelement einer zweiten Zusatzmerkmalmatrix zugeordnet. Die zweite Zusatzmerkmalmatrix repräsentiert eine weitere Eigenschaft der Bildpunkte des zweiten Kamerabildes. Der Schritt 32 kann eine Ermittlung von Farbwerten zu einem jeweiligen Bildpunkt und/oder Rauschwerten zu einer Umgebung eines jeweiligen Bildpunktes und/oder eine Erkennung von Objekten und/oder Segmenten im zweiten Kamerabild an den zweiten Koordinaten umfassen, welche jeweils in der zweiten Zusatzmerkmalmatrix dem jeweiligen Bildpunkt zugordnet werden. Im Schritt 40 erfolgt eine Ermittlung einer ersten Signaturmatrix beziehungsweise eines Signaturwertes eines Signaturmatrixelementes der ersten Signaturmatrix an aktuellen ersten Koordinaten. Im Schritt 50 erfolgt eine Ermittlung einer Verkettungsmatrix in Abhängigkeit der ersten Signaturmatrix beziehungsweise erfolgt eine Zuordnung der zu dem im Schritt 40 ermittelten Signaturwert in einer Signaturwertpositionstabelle hinterlegten Koordinaten in einem Verkettungsmatrixelement der Verkettungsmatrix mit den aktuellen ersten Koordinaten. Im Schritt 60 erfolgt eine Anpassung einer Signaturwertpositionstabelle in Abhängigkeit der ersten Signaturmatrix beziehungsweise erfolgt in der Signaturwertpositionstabelle eine Zuordnung der aktuellen ersten Koordinaten zu dem im Schritt 40 ermittelten Signaturwert. Im Schritt 70 erfolgt eine Ermittlung einer zweiten Signaturmatrix beziehungsweise eines Signaturwertes eines Signaturmatrixelementes der zweiten Signaturmatrix an aktuellen zweiten Koordinaten. Die zweiten Koordinaten unterscheiden sich vorteilhafterweise von den ersten Koordinaten. Mit anderen Worten laufen vorteilhafterweise die zweiten Koordinaten den ersten Koordinaten mit einem festen Koordinatenversatz nach. Im Schritt 80 erfolgt eine Bestimmung mindestens einer Korrespondenzmatrix in Abhängigkeit der zweiten Signaturmatrix und der Signaturwertpositionstabelle sowie in Abhängigkeit der Verkettungsmatrix und des ersten und zweiten Kamerabildes. Optional erfolgt die Bestimmung der Korrespondenzmatrix zusätzlich in Abhängigkeit der ersten Zusatzmerkmalmatrix und/oder der zweiten Zusatzmerkmalmatrix. Die Bestimmung der Korrespondenzmatrix erfolgt durch eine Differenzbildung zwischen den zweiten Koordinaten und den in der Signaturwertpositionstabelle dem im Schritt 70 ermittelten Signaturwert des Signaturmatrixelementes der zweiten Signaturmatrix zugeordneten ersten Koordinaten oder den ersten Koordinaten, welche durch die dem im Schritt 70 ermittelten Signaturwert zugeordneten ersten Koordinaten in der Verkettungsmatrix hinterlegt sind. Die zur Bestimmung der Korrespondenzmatrix im Schritt 80 durchzuführende Auswahl der ersten Koordinaten zur Differenzbildung erfolgt in Abhängigkeit einer Eigenschaft der Bildpunkte im ersten Kamerabild an den entsprechenden ersten Koordinaten und/oder einer Eigenschaft des Bildpunkts im zweiten Kamerabild an der zweiten Koordinate. In einem optionalen Schritt 90 kann es vorgesehen sein, die ermittelte Korrespondenzmatrix durch eine Plausibilisierung der ermittelten Korrespondenzmatrixelemente anzupassen. In einem optionalen weiterführenden Schritt 99 kann es vorgesehen sein, dass ein Fahrer eines Fahrzeugs in Abhängigkeit der Korrespondenzmatrix gewarnt und/oder ein teilautonomes oder autonomes Fahrassistenzverfahren ein Fahrmanöver in Abhängigkeit der ermittelten Korrespondenzmatrix durchführt. Das Verfahren wird laufend wiederholt beziehungsweise kontinuierlich mit der vorgegebenen Taktfrequenz beziehungsweise im Rechentakt durchgeführt, wobei die aktuellen ersten Koordinaten und die aktuellen zweiten Koordinaten in jedem Takt in einer vorgegebenen Reihenfolge angepasst werden. Wenn eine Erfassung 10 und 11 des jeweiligen ersten Kamerabilds oder zweiten Kamerabilds mit einer vorgegebenen Reihenfolge sequenziell zeilenweise von links oben nach rechts unten erfolgt, dann weisen die Ermittlung 40 der ersten Signaturmatrix und die Ermittlung 70 des Signaturwertes des Signaturmatrixelemtes der zweiten Signaturmatrix und die Ermittlung 70 der Korrespondenzmatrix vorteilhafterweise ebenfalls diese vorgegebene Reihenfolge auf. Mit anderen Worten werden in diesem Fall die erste Signaturmatrix, die Verkettungsmatrix, die zweite Signaturmatrix sowie die Korrespondenzmatrix vorteilhafterweise sequenziell und in der vorgegebenen Reihenfolge zeilenweise von links oben nach rechts unten ermittelt. Der jeweils ermittelte Signaturwert der ersten Signaturmatrix und der zweiten Signaturmatrix werden insbesondere nur kurzzeitig für nachfolgende Verfahrensschritte des aktuellen Taktes gespeichert und im nachfolgenden Takt überschrieben, so dass der Speicherbedarf für das Verfahren sinkt.

In einer Ausgestaltung des Verfahrens können mehrere erste Kamerabilder erfasst werden, welche jeweils einen unterschiedlichen zeitlichen Versatz zum zweiten Kamerabild aufweisen. Das Verfahren wird anschließend im Takt parallel für jedes der erfassten ersten Kamerabilder durchgeführt und demnach zu jedem erfassten ersten Kamerabild mindestens eine versatzabhängige Korrespondenzmatrix ermittelt. In einer alternativen Ausgestaltung des Verfahrens können mehrere zweite Kamerabilder erfasst werden, welche jeweils einen unterschiedlichen zeitlichen Versatz zum ersten Kamerabild aufweisen. Das Verfahren wird anschließend im Takt parallel für jedes der erfassten zweiten Kamerabilder durchgeführt und demnach zu jedem erfassten zweiten Kamerabild mindestens eine versatzabhängige Korrespondenzmatrix ermittelt. In einem optionalen Schritt 95 wird anschließend eine konsolidierte Korrespondenzmatrix ermittelt. Die Ermittlung der konsolidierten Korrespondenzmatrix erfolgt durch eine Auswahl der physikalisch korrekten Elemente der jeweiligen versatzabhängigen Korrespondenzmatrix zu unterschiedlichen ersten oder zweiten Kamerabildern in Abhängigkeit eines Vergleiches der ermittelten Korrespondenzmatrizen untereinander und/oder in Abhängigkeit mit früher bestimmten Korrespondenzmatrizen. Die versatzabhängigen Korrespondenzmatrizen repräsentieren unterschiedliche Geschwindigkeitshypothesen zwischen Bildpunkten des zweiten Kamerabildes und den korrelierenden Bildpunkten aus den ersten Kamerabildern. Die konsolidierte Korrespondenzmatrix resultiert nach einer Überprüfung der verschiedenen den zweiten Koordinaten zugeordneten Geschwindigkeitshypothesen beziehungsweise der versatzabhängigen Korrespondenzmatrizen auf Plausibilität. Dadurch steigt in der konsolidierten Korrespondenzmatrix der Anteil zuverlässig ermittelter Korrespondenzmatrixelemente.

In Figur 1 sind des Weiteren Zeitbereiche 1, 2 und 3 dargestellt. Im ersten Zeitbereich 1 erfolgt eine Aktualisierung der Erfassungen 10 und 11 der Kamerabilder mit der vorgegebenen Erfassungsrate, welche beispielsweise durch eine Kameraeigenschaft zur Erfassung 10 und 11 des ersten und zweiten Kamerabildes 101 und 102 vorgegeben ist. In dem zweiten Zeitbereich 2 erfolgen die Rechenoperationen in den verschiedenen Verfahrensschritten zur Bestimmung der Korrespondenzmatrix mit einer vorgegebenen Taktfrequenz beziehungsweise mit einem Rechentakt eines SoCs oder eines Steuergeräts. Die Erfassung 11 des zweiten Kamerabildes 102 kann alternativ dem zweiten Zeitbereich 2 zugeordnet werden, das heißt die Ermittlung 70 des Signaturwertes zum zweiten Signaturmatrixelement und die nachfolgenden Verfahrensschritte können bereits bei nur einem erfassten Pixel des zweiten Kamerabildes 102 durchgeführt werden. Im zweiten Zeitbereich 2 oder im dritten Zeitbereich 3 erfolgt die Anpassung 90 der Korrespondenzmatrix, die Ermittlung 95 einer konsolidierten Korrespondenzmatrix sowie der Schritt 99, wobei die Schritte 90, 95 und 99 jeweils in einer voneinander unterschiedlichen spezifischen Wiederholungsrate durchgeführt werden können.

Ein Speicherbedarf für das in Figur 1 dargestellte Verfahren und damit die für einen SoC benötigte Siliziumfläche wird wesentlich durch eine vorgegebene Länge des Signaturwertes beeinflusst. Bei einer vorgegebenen Länge des Signaturwerts von 8 Bit werden im zeitlichen Verlauf den jeweiligen Signaturwerten in der Signaturwertpositionstabelle häufiger neue erste Koordinaten zugeordnet als bei einer vorgegebenen Länge von 32 Bit, da eine vorgegebene Länge des Signaturwertes von 32 Bit die jeweilige Umgebung des im aktuellen Takt ermittelten Bildpunktes genauer charakterisiert und in der Regel entsprechend seltener vorkommt. Eine Größe einer Signaturwertpositionstabelle ist für die vorgegebene Länge des Signaturwert von 32 Bit allerdings länger als bei 8 Bit und die Signaturwertpositionstabelle ist entsprechend mit 2³² Positionen gegenüber 2⁸ Positionen viel größer.

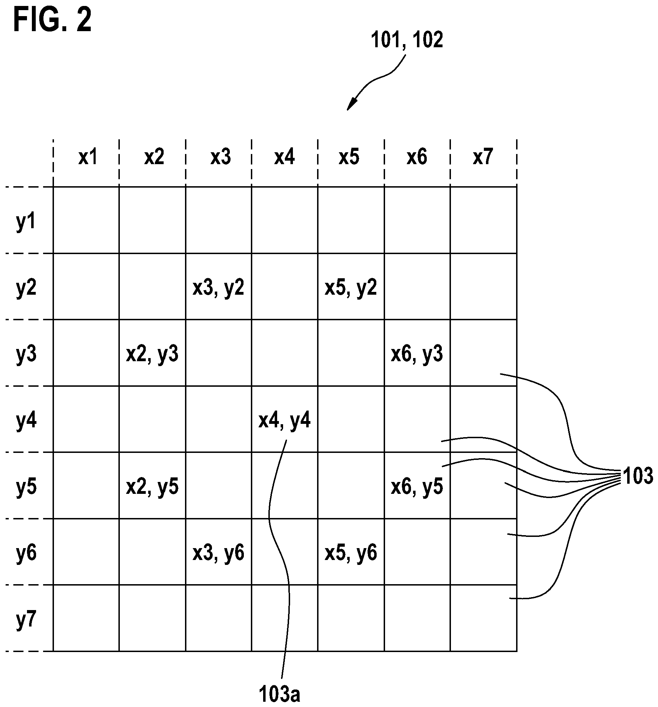

In Figur 2 ist ein erfasstes Kamerabild 101 oder 102 mit einer Vielzahl an Bildpunkten 103 beziehungsweise Pixeln dargestellt, beispielsweise ein erstes Kamerabild 101 oder ein zweites Kamerabild 102, wobei die in Figur 1 dargestellte Auflösung zur Erhöhung der Anschaulichkeit mit lediglich 7 × 7 Bildpunkten gewählt ist. Vorteilhafterweise weisen das erste Kamerabild 101 und das zweite Kamerabild 102 eine wesentlich größere Auflösung von mindestens 64 × 64 Bildpunkten auf, besonders bevorzugt mindestens eine Auflösung von 1024 × 768 Bildpunkten (XGA) mit insgesamt 786.432 einzelnen Bildpunkten. Jedem Bildpunkt 103 eines Kamerabildes 101, 102 sind beispielsweise in Figur 1 spezifische erste Koordinaten oder zweite Koordinaten beziehungsweise eine Koordinatenpaarung in Abhängigkeit einer Zeilennummer y1, y2, y3, y4, y5, y6 oder y7 usw. und einer Spaltennummer x1, x2, x3, x4, x5, x6 oder x7 usw. des Kamerabildes 101, 102 zugeordnet, beispielsweise dem Bildpunkt 103a die ersten oder zweiten Koordinaten (x4; y4). Das erste Kamerabild 101 und das zweite Kamerabild 102 werden beispielsweise als RGB-Farbbilder erfasst, das heißt jedem Bildpunkt des jeweiligen Kamerabildes 101, 102 mit entsprechenden ersten oder zweiten Koordinaten sind ein Rotanteil, ein Grünanteil und ein Blauanteil zugeordnet. Ein als Farbbild erfasstes erstes und/oder zweites Kamerabild 101, 102 kann nach dessen Erfassung 10 beziehungsweise 11 zu einem Grauwertbild umgewandelt beziehungsweise angepasst werden, wodurch jedem Bildpunkt 103 ein Grauwert zugeordnet wird. Der Grauwert, vorteilhafterweise mit 12 bit gespeichert, kann beispielsweise in Abhängigkeit eines RGB-Farbwertes bestimmt werden. Demnach liegt ein Grauwert pro Pixel zwischen 0 und 4095. Die Erfassungsrate für das erste Kamerabild 101 und das zweite Kamerabild 102 liegt beispielsweise jeweils bei 60 Kamerabildern pro Sekunde beziehungsweise 60 Hz. Beispielsweise sind das erste Kamerabild 101 und das zweite Kamerabild 102 zwei nacheinander beziehungsweise zeitlich versetzt erfasste Kamerabilder einer Kamera, welche Kamerabilder mit 60 Hz erfasst, so dass sich das erste Kamerabild 101 und das zweite Kamerabild 102 in der Regel nur marginal voneinander unterscheiden. Die Unterschiede zwischen dem ersten Kamerabild 101 und dem zweite Kamerabild 102 resultieren beispielsweise daraus, dass die Kamera an einem Fahrzeug angeordnet ist, wobei sich das Fahrzeug in einer Fahrtrichtung bewegt. Entsprechend unterscheiden sich zum Beispiel das erste Kamerabild 101 und das zeitlich versetzt erfasste zweite Kamerabild 102 der Kamera in Abhängigkeit einer Eigenbewegung des Fahrzeugs, Abständen zwischen dem Fahrzeug und Objekten sowie einer Bewegung von Objekten in der Umgebung des Fahrzeugs.

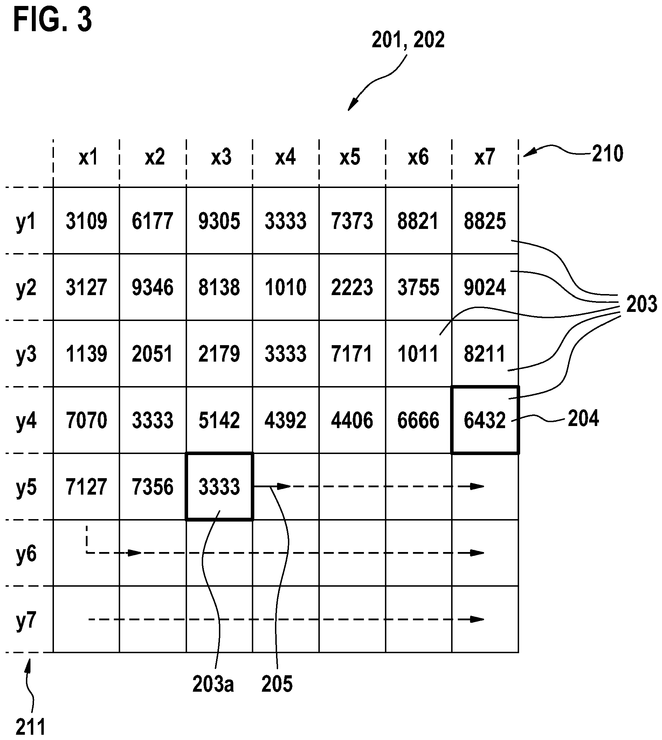

In Figur 3 ist eine erste Signaturmatrix 201 zu dem ersten Kamerabild 101 beziehungsweise eine zweite Signaturmatrix 202 zu dem zweiten Kamerabild 102 beispielhaft dargestellt. Die Signaturmatrix 201 wird in Abhängigkeit des ersten Kamerabildes 101 beziehungsweise des ersten Grauwertbildes zum ersten Kamerabild 101 ermittelt, wobei zu jedem Signaturmatrixelement 203 ein Signaturwert 204 bestimmt wird. Der Signaturwert 204 repräsentiert die Umgebung eines dem Signaturmatrixelement 203 zugeordneten Bildpunktes 103 des jeweiligen Kamerabildes 101 oder 102 und kann beispielsweise als 8-Bit, 16-Bit oder 32-Bit Wert gespeichert werden. Der Signaturwert mit 16-Bit weist demnach einen Wert zwischen 0 und 65535 auf. Der Signaturwert 204 zu jedem Signaturmatrixelement 203 lässt sich beispielsweise durch Summation und/oder Differenzbildung aus den beispielsweise jeweils um den zugeordneten Bildpunkt in einer 3 × 3 Matrix umliegenden Grauwerten bestimmen. Alternativ sind kompliziertere Berechnungen des Signaturwertes zu einem jeweiligen Bildpunkt möglich. Direkt an einem Bildrand eines Kamerabildes kann es vorgesehen sein keine Signaturen zu bestimmen, weil in diesem Beispiel eine 3 × 3 Matrix zur Bestimmung eines Signaturwertes erforderlich ist, weshalb beispielsweise Signaturwerte zu ersten und/oder zweiten Signaturmatrixelementen mit ersten oder zweiten Koordinaten am Bildrand der ersten und/oder zweiten Signaturmatrix innerhalb einer Breite von beispielsweise einem Pixel als ungültig gekennzeichnet werden (nicht dargestellt). Jedem Signaturmatrixelement 203 mit einem Signaturwert 204 der Signaturmatrix 201, 202 sind spezifische erste oder zweite Koordinaten beziehungsweise eine Koordinatenpaarung in Abhängigkeit einer Zeilennummer 211 y1, y2, y3, y4, y5, y6 oder y7 und einer Spaltennummer 210 x1, x2, x3, x4, x5, x6 oder x7 der Signaturmatrix 201, 202 zugeordnet, welche jeweils einen entsprechenden Bildpunkt im Kamerabild 101, 102 an diesen beziehungsweise zugeordneten ersten oder zweiten Koordinaten repräsentiert. Die Signaturmatrix 201 und 202 wird vorteilhafterweise im Rechentakt eines SoC oder eines Steuergeräts Signaturmatrixelement 203 für Signaturmatrixelement 203 bestimmt, wobei die Reihenfolge der Ermittlung der einzelnen Signaturelemente 203 und die Taktfrequenz der Ermittlung vorgegeben sind. Beispielsweise erfolgt die Ermittlung der Signaturmatrixelement 203 der Signaturmatrix 201 und 202 zeilenweise von oben nach unten und von links nach rechts, insbesondere jeweils ein Element einer Matrix pro Takt. Der Rechentakt kann in einem Bereich von 1 MHz bis 10 GHz liegen. In Figur 3 ist dies durch das im aktuellen Takt ermittelte Signaturmatrixelement 203a mit dem Signaturwert 3333 und den ersten oder zweiten Koordinaten (x3; y5) dargestellt. Im letzten Takt wurde das Signaturmatrixelement 203 mit dem Signaturwert 7356 und den ersten oder zweiten Koordinaten (x2; y5) und im nächsten Takt wird das das Signaturmatrixelement 203 mit den ersten oder zweiten Koordinaten (x4; y5) ermittelt. Die Reihenfolge der Berechnung der Signaturmatrixelement 203 im Rechentakt wird durch den Richtungspfeil 205 in Figur 3 veranschaulicht. Alternative Berechnungsreihenfolgen der Signaturmatrixelemente 203 in der Signaturmatrix 201 oder 202 sind möglich, beispielsweise im Takt spaltenweise von rechts nach links und von oben nach unten. Die erste Signaturmatrix 201 und die zweite Signaturmatrix 202 weisen im aktuellen Takt bevorzugt voneinander unterschiedliche erste und zweite Koordinaten auf. Mit anderen Worten werden die aktuellen Arbeitskoordinaten eines Taktes, das heißt die ersten Koordinaten und die zweiten Koordinaten in jedem Takt angepasst, insbesondere in einer vorgegebenen Reihenfolge, wobei die im Schritt 70 verwendeten zweiten Koordinaten zur Ermittlung der zweiten Signaturmatrix 70 der im Schritt 40 verwendeten aktuellen ersten Koordinaten vorteilhafterweise mit einem festen oder variablen Koordinatenversatz hinterherläuft. Bei einem variablen Koordinatenversatz wird der Koordinatenversatz beispielsweise in Abhängigkeit der ersten und/oder zweiten Koordinaten angepasst. Beispielsweise kann der Koordinatenversatz zwischen den ersten Koordinaten und den zweiten Koordinaten +30 Pixel in vertikaler Richtung betragen beziehungsweise mit anderen Worten die ersten Koordinaten den zweiten Koordinaten 30 Takte vorauslaufen, wenn die Ermittlung der zweiten Signaturmatrix in Abhängigkeit des zweiten Kamerabildes beginnt. Im Lauf der Bearbeitung kann der Koordinatenversatz langsam auf +70 Pixel in vertikaler Richtung anwachsen oder sich auf +10 Pixel oder sogar -10 Pixel in vertikaler Richtung reduzieren, wobei ein variabler Koordinatenversatz dadurch resultiert, dass die ersten Signaturmatrix und der Signaturwertes des Signaturmatrixelementes der zweiten Signaturmatrix nicht zu jedem Zeitpunkt im selben Takt ermittelt wird, sondern dass einer der beiden Ermittlungen 40, 70 zeitweise pausiert während die jeweils andere Ermittlung 40, 70 weiterläuft. Besonders vorteilhaft ist, wenn diese Pausen im Falle einer zeilenweisen Verarbeitung nicht länger als eine Zeile andauern. Der Koordinatenversatz kann negativ oder positiv oder Null sein und kann sein Vorzeichen auch im Verlauf der Verarbeitung eines Bildpaares ändern. Ein variabler Koordinatenversatz ist besonders von Vorteil, um einen Suchbereich zu verschieben.

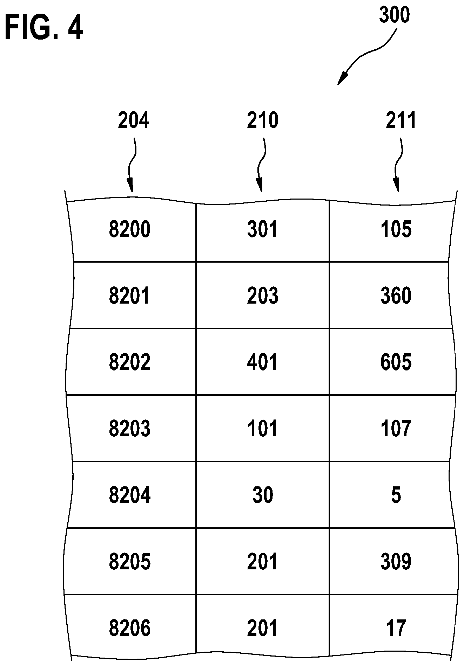

In Figur 4 ist ein Ausschnitt aus einer Signaturwertpositionstabelle 300 dargestellt. In der Signaturwertpositionstabelle 300 sind alle grundsätzlich möglichen Signaturwerte 204 entsprechend der vorgegebenen Wortlänge, beispielsweise 16-Bit, als Adressen vorhanden. Die Anpassung beziehungsweise Ermittlung der Signaturwertpositionstabelle 300 erfolgt im Takt, wobei im aktuellen Takt dem im Schritt 40 ermittelten Signaturwert 204 der ersten Signaturmatrix 201 in der Signaturwertpositionstabelle 300 die erste Koordinate beziehungsweise die aktuelle Arbeitskoordinatenpaarung 210, 211 des Signaturmatrixelementes 203 zum ermittelten Signaturwert 204 beziehungsweise die Koordinaten des entsprechenden Bildpunktes 103 zugeordnet wird. Demnach sind in der Signaturwertpositionstabelle 300 zu jedem möglichen Signaturwert 204 diejenigen ersten Koordinaten zugeordnet, an denen im aktuellen Takt oder letztmalig dieser Signaturwert 204 ermittelt wurde. Es können im Verlauf des Verfahrens Überschreibungen der einem Signaturwert 204 zugeordneten ersten Koordinaten in der Signaturwertpositionstabelle 300 resultieren, wodurch eine Eindeutigkeit der Zuordnung korrespondierender Bildpunkte zwischen dem ersten und dem zweiten Kamerabild 101, 102 mittels des Signaturwertes verloren geht. In diesem Fall sind mehrere erste Koordinaten mit dem gleichen Signaturwert in der ersten Signaturmatrix 201 ermittelt worden. Beispielsweise werden in einem im aktuellen Takt zum Signaturmatrixelement 203a ermittelten Signaturwert 204 der ersten Signaturmatrix 201, in diesem Beispiel dem Signaturwert 3333, in der Signaturwertpositionstabelle 300 die entsprechenden Koordinaten des Signaturmatrixelementes 203a zugeordnet, in diesem Beispiel die Koordinaten (x3; y5) beziehungsweise die Spaltenkoordinate 210 x3 und die Zeilenkoordinate 211 y5. Diesem Signaturwert 3333 war in der Signaturwertpositionstabelle 300 achte Takte zuvor allerdings die Koordinate (x2; y4) zugeordnet, da dort der ermittelte Signaturwert 3333 letztmalig auftrat. Um diese letzten Koordinaten (x2; y4) als Information nicht durch Überschreibung der aktuellen Koordinaten des Signaturmatrixelementes 203a zu verlieren, wird die Verkettungsmatrix 400 ermittelt.

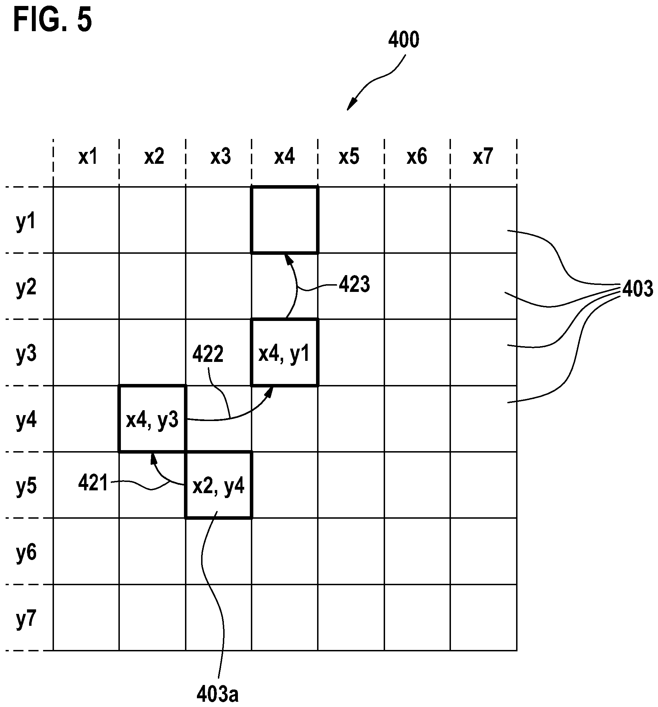

In Figur 5 ist eine Verkettungsmatrix 400 zu der ersten Signaturmatrix 201 aus Figur 3 dargestellt. Bei der Ermittlung 50 der Verkettungsmatrix 400 werden erfindungsgemäß, bevor im Schritt 60 die im aktuellen Takt vorliegenden ersten Koordinaten (x3; y5) des Signaturmatrixelementes 203a der ersten Signaturmatrix 201 in der Signaturwertpositionstabelle 300 dem entsprechenden Signaturwert 204 zugeordnet werden, die letzten dem Signaturwert 204 in der Signaturwertpositionstabelle 300 hinterlegten ersten Koordinaten (x2; y4) in das entsprechende Verkettungsmatrixelement 403a mit den aktuellen ersten Koordinaten des Signaturmatrixelementes 203a geschrieben. Die durch Eintragung der aktuellen ersten Koordinaten (x3; y5) in der Signaturwertpositionstabelle 300 überschriebenen letzten ersten Koordinaten (x2; y4) werden demnach in der Verkettungsmatrix 400 gespeichert und bleiben somit erhalten. Entsprechende Eintragungen für davorliegende Takte sind in Figur 5 für den Signaturwert 3333 in weiteren Verkettungsmatrixelementen 403 der Verkettungsmatrix 400 dargestellt. Die jeweiligen Koordinatenverweise zu in vorherigen Takten beziehungsweise vorher ermittelten gleichen Signaturwerten, welche in der Verkettungsmatrix gespeichert werden, sind in Figur 5 auch durch die Pfeile 421, 422 und 423 verdeutlicht. Die ebenfalls im Rechentakt ermittelte Verkettungsmatrix 400 stellt eine effektive Möglichkeit dar, Informationsverlust in dem erfindungsgemäßen Verfahren zu vermeiden. Die Ermittlung 80 der Korrespondenzmatrix in Abhängigkeit der Verkettungsmatrix 400 reduziert deshalb fehlerhafte Zuordnungen von Bildpunkten durch Überschreibungen in der Signaturwertpositionstabelle 300 deutlich.

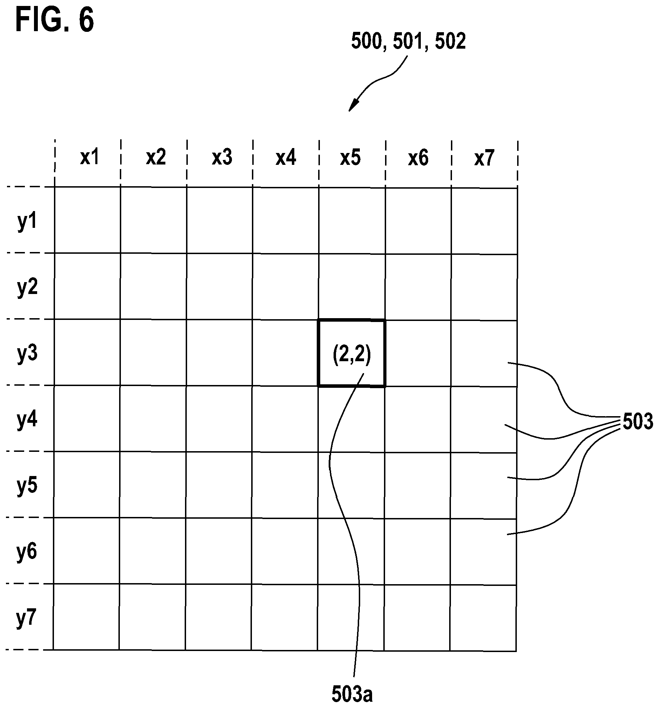

In Figur 6 ist eine Korrespondenzmatrix 500, 501, 502 dargestellt. Die Korrespondenzmatrix 500 weist in den Korrespondenzmatrixelementen 503 eine Koordinatendifferenz, beispielsweise im Korrespondenzmatrixelemente 503a (2;2), beziehungsweise den optischen Flussvektor zwischen den zweiten Koordinaten der zweiten Signaturmatrix 202 beziehungsweise der zweiten Koordinaten der Korrespondenzmatrix 500 und dem jeweiligen Signaturwert zugeordneten ersten Koordinaten aus der Signaturwertpositionstabelle 300 auf. Beispielsweise wird an den zweiten Koordinaten (x5; y3) der zweiten Signaturmatrix 202 der Signaturwert 9305 bestimmt (nicht dargestellt), welcher durch die Signaturwertpositionstabelle 300 den ersten Koordinaten (x3; y1) zugeordnet wird, da die erste Signaturmatrix 201 diesen Signaturwert 9305 an den ersten Koordinaten (x3; y1) aufweist. Durch eine Koordinatendifferenz zwischen den zweiten Koordinaten (x5; y3) und den ersten Koordinaten (x3; y1) resultiert für das in Figur 6 gekennzeichnete Korrespondenzmatrixelemente 503a mit den zweiten Koordinaten (x5; y3) der optische Flussvektor (2;2). Demnach erfolgt durch die Ermittlung der Korrespondenzmatrix 500 eine Bestimmung von zueinander korrespondierenden Bildpunkten zwischen dem ersten Kamerabild und dem zweiten Kamerabild sowie die Bestimmung der optischen Flussvektoren zwischen diesen korrespondierenden Bildpunkten. Es kann vorgesehen sein, richtungsabhängige Korrespondenzmatrizen 501 und 502 zu ermitteln, so dass jedem Korrespondenzmatrixelement 503 der jeweiligen Korrespondenzmatrix 501 und 502 nur ein eindimensionaler Wert zugeordnet wird. Die Bestimmung der Korrespondenzmatrix erfolgt zunächst durch ein Auslesen der zu einem ermittelten Signaturwert eines aktuellen Signaturmatrixelements der zweiten Signaturmatrix 202 zugeordneten ersten Koordinaten in der Signaturwertpositionstabelle 300. Anschließend wird mindestens ein Verkettungsmatrixelement 403 in Abhängigkeit dieser zugeordneten ersten Koordinaten ausgelesen. Bevorzugt wird eine Folge von Verkettungsmatrixelementen in Abhängigkeit der zugeordneten ersten Koordinaten und der jeweils dort hinterlegten ersten Koordinaten ausgelesen, beispielsweise werden drei Verkettungsmatrixelemente beziehungsweise Koordinaten ausgelesen, wie durch die Pfeile 421 und 422 in Figur 5 verdeutlicht, wobei zu diesen ausgelesenen ersten Koordinaten jeweils der gleiche Signaturwert ermittelt wurde. Anschließend wird eine zusätzliche Eigenschaft eines Bildpunktes des zweiten Kamerabildes mit den zweiten Koordinaten der zweiten Signaturmatrix des aktuellen Taktes ermittelt beziehungsweise ausgelesen, beispielsweise ein Farbwert. Diese ausgelesene zusätzliche Eigenschaft wird anschließend mit der jeweiligen Eigenschaft der Bildpunkte des ersten Kamerabildes an den ausgelesenen ersten Koordinaten verglichen. Die Bestimmung eines Korrespondenzmatrixelementes der Korrespondenzmatrix erfolgt dann in Abhängigkeit des Vergleichs, das heißt durch Differenzbildung zwischen den zweiten Koordinaten des aktuell ermittelten Signaturelements der zweiten Signaturmatrix und der zu diesem Signaturwert zugeordneten ersten Koordinaten aus der Signaturwertpositionstabelle oder der aus mindestens einem Verkettungsmatrixelement ausgelesenen ersten Koordinaten in Abhängigkeit der ermittelten zusätzlichen Eigenschaften der jeweiligen Bildpunkte.

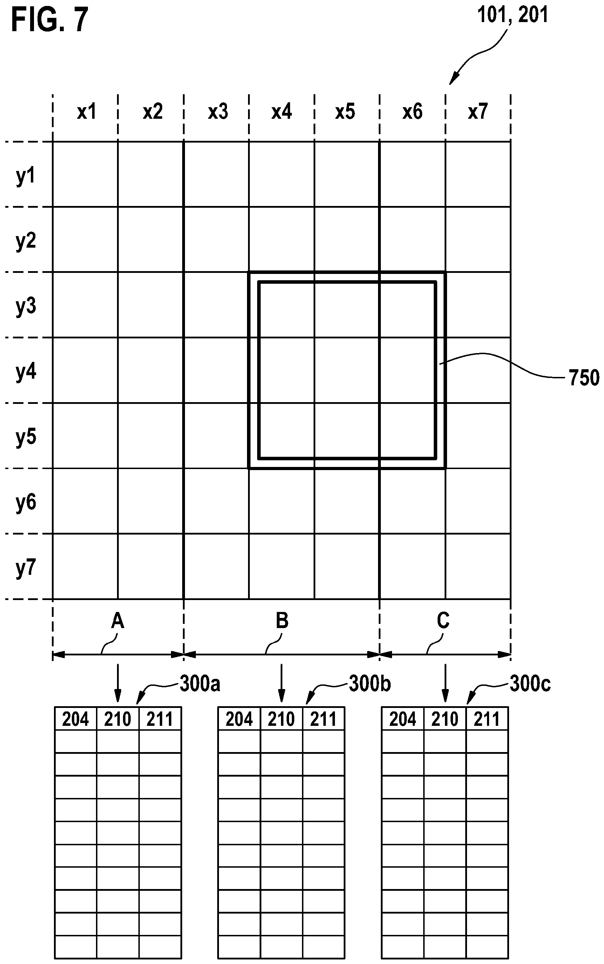

In Figur 7 ist eine Aufteilung der ersten Signaturmatrix in drei Teilbereiche A, B und C dargestellt. Für jeden der Teilbereiche A, B und C der ersten Signaturmatrix werden jeweils eine separate Signaturwertpositionstabelle 300a, 300b und 300c und/oder jeweils eine separate Verkettungsmatrix 400a, 400b und 400c ermittelt. Im Schritt 80 erfolgt zur Ermittlung der Korrespondenzmatrix 500 zunächst eine Auswahl der passenden Signaturwertpositionstabelle 300a, 300b oder 300c und/oder der passenden Verkettungsmatrix 400a, 400b und 400c in Abhängigkeit der im Schritt 70 bearbeiteten aktuellen zweiten Koordinaten. Anschließend werden zur Ermittlung der Korrespondenzmatrix in der ausgewählten beziehungsweise der den aktuellen zweiten Koordinaten zugeordneten Signaturwertpositionstabelle 300a, 300b oder 300c die dem Signaturwert zugeordneten ersten Koordinaten und/oder die entsprechend zugeordneten Verkettungsmatrixelemente aus der passenden Verkettungsmatrix 400a, 400b oder 400c mit den weiteren ersten Koordinaten zu diesem Signaturwert ausgelesen. In einer optionalen Weiterführung können eine Form und/oder eine Größe eines Teilbereiches A, B und C zur Ermittlung der Signaturwertpositionstabellen 300a, 300b und 300c und/oder der Verkettungsmatrizen 400a, 400b und 400c in Abhängigkeit einer erfassten Geschwindigkeit eines Fahrzeugs, welches einen SoC oder ein Steuergerät zur Durchführung des Verfahrens aufweist, und/oder in Abhängigkeit von der ersten Zusatzmerkmalsmatrix angepasst werden. In Figur 7 ist außerdem ein Suchbereich 750 als Submatrix in der ersten Signaturmatrix 201 mit 3 × 3 Pixeln dargestellt. Der Suchbereich 750 kann in Abhängigkeit der aktuellen zweiten Koordinaten und/oder in Abhängigkeit von zu einem früheren Zeitpunkt ermittelten Korrespondenzmatrizen ermittelt werden. Der Suchbereich 750 weist einen oder mehrere Teilbereiche A, B und C auf. Beispielsweise liegt der Suchbereich 750 symmetrisch um aktuelle zweite Koordinaten (x5; y4), wie in Figur 7 durch den Doppelstrichrahmen dargestellt. Alternativ ist eine asymmetrische Lage des Suchbereichs 750 um aktuelle zweite Koordinaten (x5; y4) denkbar. Der Suchbereich 750 kann des Weiteren optional in Abhängigkeit eines optischen Flussvektors und der aktuellen zweiten Koordinate beziehungsweise einer Korrespondenzmatrix aus der Vergangenheit ermittelt werden. Der Suchbereich 750 begrenzt die aus der Signaturwertpositionstabellen 300a, 300b und 300c und/oder den Verkettungsmatrizen 400a, 400b und 400c ausgelesenen ersten Koordinaten zu einem ermittelten Signaturwert zur Ermittlung der Korrespondenzmatrix beziehungsweise der Differenzbildung auf die Koordinaten in diesem Suchbereich 750. In einer optionalen Weiterführung kann eine Form und/oder eine Größe eines Suchbereichs 750 in Abhängigkeit einer erfassten Geschwindigkeit eines Fahrzeugs und/oder in Abhängigkeit von Korrespondenzmatrizen aus der Vergangenheit und/oder in Abhängigkeit der ersten und/oder zweiten Zusatzmerkmalmatrix und/oder in Abhängigkeit im ersten und/oder zweiten Kamerabild 101, 102 erkannter Objekte und/oder erkannter Segmente angepasst werden.

Es kann vorkommen, dass keine zuverlässige Korrespondenz für einen Bildpunkt im zweiten Kamerabild 102 ermittelt wird. Beispielsweise erlauben sowohl die im Schritt 80 in Abhängigkeit des im Schritt 70 ermittelten Signaturwertes in der Signaturwertpositionstabelle ausgelesenen ersten Koordinaten sowie die durch die Verkettungsmatrix zu diesem Signaturwert zugeordneten ersten Koordinaten und die Eigenschaften der jeweils zu den ersten Koordinaten zugeordneten Bildpunkte des ersten und zweiten Kamerabildes und/oder die entsprechenden Elemente der ersten Zusatzmerkmalsmatrix und/oder der zweiten Zusatzmerkmalsmatrix keine zuverlässige Zuordnung zwischen einem Bildpunkt eines ersten Kamerabildes und einem Bildpunkt eines zweiten Kamerabildes. In den Fällen fehlender zuverlässiger Zuordnung kann die Korrespondenzmatrix an den entsprechenden zweiten Koordinaten auf einen Dummy-Wert gesetzt werden, beispielsweise auf Null. Das Verfahren garantiert somit auch bei fehlenden Zuordnungen eine Ermittlung einer Korrespondenzmatrix nach einer vorgegebenen Anzahl an Taktzyklen in Abhängigkeit der Taktfrequenz, wodurch eine echtzeitfähige Hardwareimplementierung ermöglicht wird.

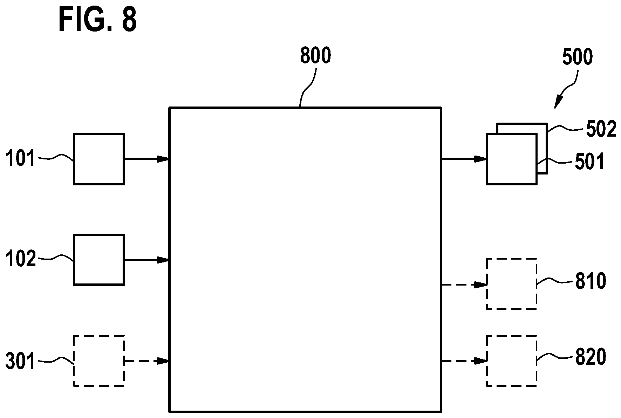

In Figur 8 ist ein SoC 800 zur Durchführung des erfindungsgemäßen Verfahrens dargestellt. Der SoC 800 erfasst ein erstes Kamerabild 101 und ein zweites Kamerabild 102, wobei das erste Kamerabild 101 und das zweite Kamerabild 102 bevorzugt mittels einer Kamera erfasst werden. Des Weiteren kann der SoC optional eine Fahrzeuggeschwindigkeit 801 und/oder eine Gierrate eines Fahrzeugs und/oder eine Nickrate und/oder eine Wankrate eines Fahrzeugs zur Anpassung der Teilbereiche A, B und C erfassen. Der SoC 800 ist dazu eingerichtet, ein Ausgangssignal zu erzeugen, welches die Korrespondenzmatrix 500 beziehungsweise die Korrespondenzmatrizen 501 und 502 repräsentiert. Optional kann der SoC 800 dazu eingerichtet sein, ein weiteres Ausgangssignal zu erzeugen, welches eine Bewertungsmatrix 810 zu der Korrespondenzmatrix 500 beziehungsweise den Korrespondenzmatrizen 501 und 502 repräsentiert. Durch Ausgabe der Bewertungsmatrix 810 kann beispielsweise die Anpassung 90 der Korrespondenzmatrix 500 später in einem Steuergerät durchgeführt werden. Optional kann der SoC 800 des Weiteren dazu eingerichtet sein, Rohbilddaten 820 auszugeben, welche das erste Kamerabild 101 und das zweite Kamerabild 102 repräsentieren. Diese Rohbilddaten 820 können einem Fahrer eines Fahrzeuges beispielsweise angezeigt werden. Der SoC weist eine Taktfrequenz zwischen 1 MHz und 10 GHz und einen elektrischen Speicher zwischen 1 MB bis 5 GB auf.

## Patentansprüche

1. Verfahren zur kontinuierlichen Bestimmung von zueinander korrespondierenden Bildpunkten zwischen einem ersten Kamerabild und einem zweiten Kamerabild, wobei das Verfahren mindestens eine vorgegebene Taktfrequenz aufweist, umfassend die folgenden Verfahrensschritte
• Erfassung (10) des ersten Kamerabildes (101),
• Erfassung (11) des zweiten Kamerabildes (102),
• Ermittlung (40) mindestens eines ersten Signaturmatrixelementes (203) mit ersten Koordinaten einer ersten Signaturmatrix (201) in Abhängigkeit des ersten Kamerabildes (101) pro Takt der vorgegebenen Taktfrequenz, wobei der ermittelte Signaturwert des ersten Signaturmatrixelementes (203) jeweils eine Umgebung eines Bildpunkts des ersten Kamerabildes (101) repräsentiert,
• Zuordnung (60) der ersten Koordinaten eines Taktes zu dem ermittelten Signaturwert des ersten Signaturmatrixelementes (203) in einer Signaturwertpositionstabelle (300),
• Ermittlung (70) mindestens eines Signaturwertes eines zweiten Signaturmatrixelementes (203) mit zweiten Koordinaten einer zweiten Signaturmatrix (202) in Abhängigkeit des zweiten Kamerabildes (102) pro Takt der vorgegebenen Taktfrequenz, wobei der ermittelte Signaturwert des zweiten Signaturmatrixelementes (203) eine Umgebung eines Bildpunkts des zweiten Kamerabildes (102) repräsentiert, und
• Bestimmung (80) mindestens eines Elementes (503) einer Korrespondenzmatrix (500, 501, 502) in Abhängigkeit der Signaturwertpositionstabelle (300), des im Takt ermittelten Signaturwertes des zweiten Signaturmatrixelementes (203) und der zweiten Koordinaten dieses zweiten Signaturmatrixelementes (203) durch Differenzbildung zwischen ersten Koordinaten und zweiten Koordinaten mit dem jeweils gleichen Signaturwert, wobei die Korrespondenzmatrix (500, 501, 502) zueinander korrespondierende Bildpunkte und die jeweiligen ermittelten optischen Flussvektoren zwischen dem ersten Kamerabild (101) und dem zweiten Kamerabild (102) repräsentiert,
**dadurch gekennzeichnet, dass** die folgenden Schritte durchgeführt werden
• Ermittlung (50) mindestens eines Verkettungsmatrixelementes (403) einer Verkettungsmatrix (400) in Abhängigkeit der ersten Signaturmatrix (201) und der Signaturwertpositionstabelle (300) pro Takt, wobei bevor im Schritt (60) die im aktuellen Takt vorliegenden ersten Koordinaten des Signaturmatrixelementes (203) der ersten Signaturmatrix (201) in der Signaturwertpositionstabelle (300) dem entsprechenden Signaturwert (204) zugeordnet werden, die letzten dem Signaturwert (204) in der Signaturwertpositionstabelle (300) hinterlegten ersten Koordinaten in das entsprechende Verkettungsmatrixelement (403) mit den aktuellen ersten Koordinaten des Signaturmatrixelementes (203) geschrieben werden, und
• Bestimmung (80) des Elementes (503) der Korrespondenzmatrix (500, 501, 502) zusätzlich in Abhängigkeit der ermittelten Verkettungsmatrix (400), des ersten Kamerabildes (101) und des zweiten Kamerabildes (102), wobei die Differenzbildung im aktuellen Takt zwischen den zweiten Koordinaten des aktuellen Taktes und in Abhängigkeit einer Auswahl der dem Signaturwert der zweiten Signaturmatrix des aktuellen Takts zugeordneten und ausgelesenen ersten Koordinaten aus der Verkettungsmatrix oder der diesem Signaturwert zugeordneten und ausgelesenen ersten Koordinate aus der Signaturwertpositionstabelle erfolgt, wobei die Auswahl in Abhängigkeit einer Eigenschaft der jeweils zu den ersten und zweiten Koordinaten zugeordneten Bildpunkte erfolgt.

2. Verfahren nach Anspruch 1, **dadurch gekennzeichnet, dass** die ermittelten Signaturwerte der ersten Signaturmatrix (201) und der zweiten Signaturmatrix (202) eine vorgegebene Länge kleiner oder gleich 16 Bit aufweisen.

3. Verfahren nach einem der vorhergehenden Ansprüche, **dadurch gekennzeichnet, dass** der folgende Verfahrensschritt durchgeführt wird
• Erfassung (10) mehrerer erster Kamerabilder (101) mit jeweils unterschiedlichem zeitlichen Versatz zum zweiten Kamerabild, wobei das Verfahren anschließend im Takt für jedes dieser erfassten ersten Kamerabilder (101) parallel durchgeführt wird, so dass im Schritt (80) pro Takt mehrere Elemente (503) jeweils versatzabhängiger Korrespondenzmatrizen (500, 501, 502) bestimmt werden.

4. Verfahren nach einem der vorhergehenden Ansprüche, **dadurch gekennzeichnet, dass** der folgende Verfahrensschritt durchgeführt wird
• Erfassung (11) mehrerer zweiter Kamerabilder (102) mit jeweils unterschiedlichem zeitlichen Versatz zum ersten Kamerabild (101), wobei das Verfahren anschließend im Takt für jedes dieser erfassten zweiten Kamerabilder (101) parallel durchgeführt wird, so dass im Schritt (80) pro Takt mehrere Elemente (503) jeweils versatzabhängiger Korrespondenzmatrizen (500, 501, 502) bestimmt werden.

5. Verfahren nach einem der vorhergehenden Ansprüche, **dadurch gekennzeichnet, dass** die folgenden Schritte durchgeführt werden,
• Ermittlung (31) eines Zusatzmerkmalelements einer ersten Zusatzmerkmalmatrix in Abhängigkeit des ersten Kamerabildes (101) pro Takt, wobei das Zusatzmerkmalelement eine Eigenschaft eines zugeordneten Bildpunktes und/oder eine Eigenschaft der Umgebung des zugeordneten Bildpunktes des ersten Kamerabildes (101) repräsentiert, und/oder
• Ermittlung (32) eines Zusatzmerkmalelements einer zweiten Zusatzmerkmalmatrix in Abhängigkeit des zweiten Kamerabildes (102) pro Takt, wobei das Zusatzmerkmalelement eine Eigenschaft eines zugeordneten Bildpunktes und/oder eine Eigenschaft der Umgebung des zugeordneten Bildpunktes des zweiten Kamerabildes (102) repräsentiert,
• Bestimmung (80) der Korrespondenzmatrix (500, 501, 502) zusätzlich in Abhängigkeit der ersten Zusatzmerkmalmatrix und/oder der zweiten Zusatzmerkmalmatrix.

6. Verfahren nach einem der vorhergehenden Ansprüche, **dadurch gekennzeichnet, dass** mehrere Signaturwertpositionstabellen (300a, 300b, 300c) und/oder mehrere Verkettungsmatrizen (400a, 400b, 400c) zur der ersten Signaturmatrix (201) bestimmt werden, wobei jede Signaturwertpositionstabelle (201) und/oder Verkettungsmatrix jeweils einen Teilbereich (A, B, C) der ersten Signaturmatrix (201) repräsentiert.

7. Verfahren nach einem der vorhergehenden Ansprüche, **dadurch gekennzeichnet, dass** die Bestimmung (80) der Korrespondenzmatrix (500, 501, 502) in Abhängigkeit eines vorgegebenen Suchbereichs (750) erfolgt, wobei der vorgegebene Suchbereich (750) in Abhängigkeit der zweiten Koordinaten des Taktes ermittelt wird.

8. Verfahren nach einem der vorhergehenden Ansprüche, **dadurch gekennzeichnet, dass** die zweiten Koordinaten und die ersten Koordinaten im Takt einen Koordinatenversatz aufweisen, wobei die zweiten Koordinaten den ersten Koordinaten insbesondere kontinuierlich mit einem festen oder variablen Koordinatenversatz mit der vorgegebenen Taktfrequenz nachläuft.

9. Verfahren nach einem der vorhergehenden Ansprüche, **dadurch gekennzeichnet, dass** folgender Schritt durchgeführt wird
• Anpassung (90) eines Korrespondenzmatrixelementes der Korrespondenzmatrix (500, 501, 502) in Abhängigkeit der Korrespondenzmatrixelemente in einer Umgebung dieses Korrespondenzmatrixelementes.

10. System-on-a-Chip, SoC (800), welcher dazu eingerichtet ist, ein Verfahren nach einem der Ansprüche 1 bis 9 durchzuführen, wobei der SoC (800) ferner dazu eingerichtet ist,
• ein Ausgangssignal in Abhängigkeit der bestimmten Korrespondenzmatrix (500, 501, 502) zu erzeugen, wobei das Ausgangssignal optische Flussvektoren zwischen dem ersten und dem zweiten Kamerabild (101, 102) repräsentiert.

11. Kamerasystem, aufweisend
• mindestens eine Kamera, welche dazu eingerichtet ist, ein erstes Kamerabild (101) und ein zweites Kamerabild (102) kontinuierlich mit einer vorgegebenen Erfassungsrate zu erfassen, und
• einen SoC (800) nach Anspruch 10.

12. Steuergerät, welches dazu eingerichtet ist, ein Verfahren nach einem der Ansprüche 1 bis 9 durchzuführen.

13. Fahrzeug mit einem Kamerasystem nach Anspruch 11 oder einem Steuergerät nach Anspruch 12.

## Claims

1. Method for continuously determining mutually corresponding pixels between a first camera image and a second camera image, the method having at least one predefined clock frequency, comprising the following method steps:
• capturing (10) the first camera image (101),
• capturing (11) the second camera image (102),
• ascertaining (40) at least one first signature matrix element (203) having first coordinates of a first signature matrix (201) as a function of the first camera image (101) per clock cycle of the predefined clock frequency, the ascertained signature value of the first signature matrix element (203) representing in each case surroundings of a pixel of the first camera image (101),
• assigning (60) the first coordinates of a clock cycle to the ascertained signature value of the first signature matrix element (203) in a signature value position table (300),
• ascertaining (70) at least one signature value of a second signature matrix element (203) having second coordinates of a second signature matrix (202) as a function of the second camera image (102) per clock cycle of the predefined clock frequency, the ascertained signature value of the second signature matrix element (203) representing surroundings of a pixel of the second camera image (102), and
• determining (80) at least one element (503) of a correspondence matrix (500, 501, 502) as a function of the signature value position table (300), of the cyclically ascertained signature value of the second signature matrix element (203) and of the second coordinates of this second signature matrix element (203) by way of difference formation between first coordinates and second coordinates with the same signature value in each case, the correspondence matrix (500, 501, 502) representing mutually corresponding pixels and the respective ascertained optical flow vectors between the first camera image (101) and the second camera image (102),
**characterized in that** the following steps are carried out:
• ascertaining (50) at least one concatenation matrix element (403) of a concatenation matrix (400) as a function of the first signature matrix (201) and the signature value position table (300) per clock cycle, in which case, before in step (60) the first coordinates - present in the current clock cycle - of the signature matrix element (203) of the first signature matrix (201) in the signature value position table (300) are assigned to the corresponding signature value (204), the last first coordinates stored for the signature value (204) in the signature value position table (300) are written into the corresponding concatenation matrix element (403) with the current first coordinates of the signature matrix element (203), and
• determining (80) the element (503) of the correspondence matrix (500, 501, 502) additionally as a function of the ascertained concatenation matrix (400), of the first camera image (101) and of the second camera image (102), the difference formation being effected in the current clock cycle between the second coordinates of the current clock cycle and as a function of a selection of the first coordinates from the concatenation matrix, said first coordinates being assigned to the signature value of the second signature matrix of the current clock cycle and being read out, or of the first coordinate from the signature value position table, said first coordinate being assigned to this signature value and being read out, the selection being effected as a function of a property of the pixels respectively assigned to the first and second coordinates.

2. Method according to Claim 1, **characterized in that** the ascertained signature values of the first signature matrix (201) and of the second signature matrix (202) have a predefined length less than or equal to 16 bits.

3. Method according to either of the preceding claims, **characterized in that** the following method step is carried out:
• capturing (10) a plurality of first camera images (101) with in each case a different temporal offset with respect to the second camera image, the method subsequently being carried out cyclically in parallel for each of these captured first camera images (101), such that a plurality of elements (503) of in each case offset-dependent correspondence matrices (500, 501, 502) are determined per clock cycle in step (80).

4. Method according to any of the preceding claims, **characterized in that** the following method step is carried out:
• capturing (11) a plurality of second camera images (102) with in each case a different temporal offset with respect to the first camera image (101), the method subsequently being carried out cyclically in parallel for each of these captured second camera images (101), such that a plurality of elements (503) of in each case offset-dependent correspondence matrices (500, 501, 502) are determined per clock cycle in step (80).

5. Method according to any of the preceding claims, **characterized in that** the following steps are carried out:
• ascertaining (31) an additional feature element of a first additional feature matrix as a function of the first camera image (101) per clock cycle, the additional feature element representing a property of an assigned pixel and/or a property of the surroundings of the assigned pixel of the first camera image (101), and/or
• ascertaining (32) an additional feature element of a second additional feature matrix as a function of the second camera image (102) per clock cycle, the additional feature element representing a property of an assigned pixel and/or a property of the surroundings of the assigned pixel of the second camera image (102),
• determining (80) the correspondence matrix (500, 501, 502) additionally as a function of the first additional feature matrix and/or of the second additional feature matrix.

6. Method according to any of the preceding claims, **characterized in that** a plurality of signature value position tables (300a, 300b, 300c) and/or a plurality of concatenation matrices (400a, 400b, 400c) are determined with respect to the first signature matrix (201), each signature value position table (201) and/or concatenation matrix representing in each case a sub-area (A, B, C) of the first signature matrix (201).

7. Method according to any of the preceding claims, **characterized in that** the determination (80) of the correspondence matrix (500, 501, 502) is effected as a function of a predefined search area (750), the predefined search area (750) being ascertained as a function of the second coordinates of the clock cycle.

8. Method according to any of the preceding claims, **characterized in that** the second coordinates and the first coordinates cyclically have a coordinate offset, the second coordinates lagging behind the first coordinates in particular continuously with a fixed or variable coordinate offset with the predefined clock frequency.

9. Method according to any of the preceding claims, **characterized in that** the following step is carried out:
• adapting (90) a correspondence matrix element of the correspondence matrix (500, 501, 502) as a function of the correspondence matrix elements in surroundings of this correspondence matrix element.

10. System-on-a-Chip, SoC (800), configured to carry out a method according to any of Claims 1 to 9, the SoC (800) furthermore being configured
• to generate an output signal as a function of the determined correspondence matrix (500, 501, 502), the output signal representing optical flow vectors between the first and second camera images (101, 102).

11. Camera system, having
• at least one camera configured to capture a first camera image (101) and a second camera image (102) continuously with a predefined capture rate, and
• an SoC (800) according to Claim 10.

12. Control unit configured to carry out a method according to any of Claims 1 to 9.

13. Vehicle comprising a camera system according to Claim 11 or a control unit according to Claim 12.

## Revendications

1. Procédé permettant de déterminer en continu des pixels correspondant les uns aux autres entre une première image de caméra et une seconde image de caméra, dans lequel le procédé présente au moins une fréquence de cycle prédéfinie, comprenant les étapes de procédé suivantes consistant à
• acquérir (10) la première image de caméra (101),
• acquérir (11) la seconde image de caméra (102),
• établir (40) au moins un premier élément de matrice de signature (203) avec des premières coordonnées d'une première matrice de signature (201) en fonction de la première image de caméra (101) pour chaque cycle de la fréquence de cycle prédéfinie, dans lequel la valeur de signature établie du premier élément de matrice de signature (203) représente respectivement un environnement d'un pixel de la première image de caméra (101),
• attribuer (60) les premières coordonnées d'un cycle à la valeur de signature établie du premier élément de matrice de signature (203) dans une table de position de valeur de signature (300),
• établir (70) au moins une valeur de signature d'un second élément de matrice de signature (203) avec des secondes coordonnées d'une seconde matrice de signature (202) en fonction de la seconde image de caméra (102) pour chaque cycle de la fréquence de cycle prédéfinie, dans lequel la valeur de signature établie du second élément de matrice de signature (203) représente un environnement d'un pixel de la seconde image de caméra (102), et
• déterminer (80) au moins un élément (503) d'une matrice de correspondance (500, 501, 502) en fonction de la table de position de valeur de signature (300) de la valeur de signature, établie dans le cycle, du second élément de matrice de signature (203) et des secondes coordonnées de ce second élément de matrice de signature (203) par soustraction entre des premières coordonnées et des secondes coordonnées ayant respectivement la même valeur de signature, dans lequel la matrice de correspondance (500, 501, 502) représente des pixels qui correspondent les uns aux autres et les vecteurs de flux optique respectivement établis entre la première image de caméra (101) et la seconde image de caméra (102),
**caractérisé en ce que** les étapes suivantes sont exécutées, consistant à
• établir (50) au moins un élément de matrice d'enchaînement (403) d'une matrice d'enchaînement (400) en fonction de la première matrice de signature (201) et de la table de position de valeur de signature (300) pour chaque cycle, dans lequel, avant qu'à l'étape (60) les premières coordonnées de l'élément de matrice de signature (203) de la première matrice de signature (201), présentes dans le cycle actuel, ne soit attribuées dans la table de position de valeur de signature (300) à la valeur de signature correspondante (204), les premières coordonnées les plus récentes, mémorisées pour la valeur de signature (204) dans la table de position de valeur de signature (300), sont inscrites dans l'élément de matrice d'enchaînement (403) correspondant avec les premières coordonnées actuelles de l'élément de matrice de signature (203), et
• déterminer (80) l'élément (503) de la matrice de correspondance (500, 501, 502) en plus en fonction de la matrice d'enchaînement (400) établie, de la première image de caméra (101) et de la seconde image de caméra (102), dans lequel la soustraction est effectuée dans le cycle actuel entre les secondes coordonnées du cycle actuel et en fonction d'une sélection des premières coordonnées lues et attribuées à la valeur de signature de la seconde matrice de signature du cycle actuel à partir de la matrice d'enchaînement ou de la première coordonnée lue et attribuée à cette valeur de signature à partir de la table de position de valeur de signature, dans lequel la sélection est effectuée en fonction d'une propriété des pixels respectivement attribués aux premières et secondes coordonnées.

2. Procédé selon la revendication 1, **caractérisé en ce que** les valeurs de signature établies de la première matrice de signature (201) et de la seconde matrice de signature (202) présentent une longueur prédéfinie inférieure ou égale à 16 bits.

3. Procédé selon l'une quelconque des revendications précédentes, **caractérisé en ce que** l'étape de procédé suivante est exécutée
• acquérir (10) plusieurs premières images de caméra (101) avec un décalage temporel respectivement différent par rapport à la seconde image de caméra, dans lequel le procédé est ensuite exécuté dans le cycle en parallèle pour chacune de ces premières images de caméra (101) acquises de sorte qu'à l'étape (80) plusieurs éléments (503) de matrices de correspondance (500, 501, 502) respectivement dépendant du décalage sont déterminés pour chaque cycle.

4. Procédé selon l'une quelconque des revendications précédentes, **caractérisé en ce que** l'étape de procédé suivant est exécutée
• acquérir (11) plusieurs secondes images de caméra (102) avec un décalage temporel respectivement différent par rapport à la première image de caméra (101), dans lequel le procédé est ensuite exécuté dans le cycle en parallèle pour chacune de ces secondes images de caméra (101) acquises de sorte qu'à l'étape (80) plusieurs éléments (503) de matrices de correspondance (500, 501, 502) respectivement dépendant du décalage sont déterminés pour chaque cycle.

5. Procédé selon l'une quelconque des revendications précédentes, **caractérisé en ce que** les étapes suivantes sont exécutées
• établir (31) un élément caractéristique supplémentaire d'une première matrice de caractéristiques supplémentaires en fonction de la première image de caméra (101) pour chaque cycle, dans lequel l'élément caractéristique supplémentaire représente une propriété d'un pixel attribué et/ou une propriété de l'environnement du pixel attribué de la première image de caméra (101), et/ou
• établir (32) un élément caractéristique supplémentaire d'une seconde matrice de caractéristiques supplémentaires en fonction de la seconde image de caméra (102) pour chaque cycle, dans lequel l'élément caractéristique supplémentaire représente une propriété d'un pixel attribué et/ou une propriété de l'environnement du pixel attribué de la seconde image de caméra (102),
• déterminer (80) la matrice de correspondance (500, 501, 502) de plus en fonction de la première matrice de caractéristiques supplémentaires et/ou de la seconde matrice de caractéristiques supplémentaires.

6. Procédé selon l'une quelconque des revendications précédentes, **caractérisé en ce que** plusieurs tables de position de valeur de signature (300a, 300b, 300c) et/ou plusieurs matrices d'enchaînement (400a, 400b, 400c) sont déterminées pour la première matrice de signature (201), dans lequel chaque table de position de valeur de signature (201) et/ou matrice d'enchaînement représente respectivement une zone partielle (A, B, C) de la première matrice de signature (201) .

7. Procédé selon l'une quelconque des revendications précédentes, **caractérisé en ce que** la détermination (80) de la matrice de correspondance (500, 501, 502) est effectuée en fonction d'une zone de recherche prédéfinie (750), la zone de recherche prédéfinie (750) étant établie en fonction des secondes coordonnées du cycle.

8. Procédé selon l'une quelconque des revendications précédentes, **caractérisé en ce que** les secondes coordonnées et les premières coordonnées présentent un décalage de coordonnées dans le cycle, dans lequel les secondes coordonnées sont en retard sur les premières coordonnées en particulier en continu avec un décalage de coordonnées fixe ou variable à la fréquence de cycle prédéfinie.

9. Procédé selon l'une quelconque des revendications précédentes, **caractérisé en ce que** l'étape suivante est exécutée
• adapter (90) un élément de matrice de correspondance de la matrice de correspondance (500, 501, 502) en fonction des éléments de matrice de correspondance dans un environnement de cet élément de matrice de correspondance.

10. Système sur puce, SoC (800), qui est conçu pour exécuter un procédé selon l'une quelconque des revendications 1 à 9, dans lequel le SoC (800) est en outre conçu pour
• générer un signal de sortie en fonction de la matrice de correspondance (500, 501, 502) déterminée, dans lequel le signal de sortie représente des vecteurs de flux optique entre la première et la seconde image de caméra (101, 102).

11. Système de caméra, présentant
• au moins une caméra qui est conçue pour acquérir une première image de caméra (101) et une seconde image de caméra (102) en continu à un taux d'acquisition prédéfini, et
• un SoC (800) selon la revendication 10.

12. Appareil de commande qui est conçu pour exécuter le procédé selon l'une quelconque des revendications 1 à 9.

13. Véhicule comprenant un système de caméra selon la revendication 11 ou un appareil de commande selon la revendication 12.
